# EUROPEAN PATENT APPLICATION

(11) **EP 3 169 114 A1**
(43) Date of publication of application: **17.05.2017**
(21) Application number: 15777309.4
(22) Date of filing: 19.01.2015
(51) Int. Cl.: H04W 52/02

(54) **METHOD AND SYSTEM FOR REALIZING NOTIFICATION OF SMALL-CELL STATE**

(30) Priority: 08.08.2014 CN 201410390653
(71) Applicant: ZTE Corporation, Shenzhen, Guangdong 518057 (CN)
(72) Inventor: XU, Hanqing, Shenzhen Guangdong 518057 (CN); LI, Yu Ngok, Shenzhen Guangdong 518057 (CN); ZHAO, Yajun, Shenzhen Guangdong 518057 (CN); MO, Linmei, Shenzhen Guangdong 518057 (CN); WU, Huaming, Shenzhen Guangdong 518057 (CN)
(74) Representative: Savi, Massimiliano
(86) International application number: PCT/CN2015/070997
(87) International publication number: WO 2015/154564

(57) **Abstract**

A method and system for realizing notification of a state of a small cell are disclosed, herein the method includes: according to a carrier scenario in which cell state information for executing an ON/OFF operation is transmitted, determining corresponding members and transmission manners for transmitting the cell state information for executing an ON/OFF operation to a User Equipment (UE); and according to the determined members and transmission manners for transmitting the cell state information for executing an ON/OFF operation to the UE, transmitting the cell state information for executing an ON/OFF operation to complete the notification of the state of the small cell; herein the members for transmitting the cell state information for executing an ON/OFF operation are PCells, SCells or small cells. The cell state information for executing an ON/OFF operation is transmitted to the UE by using corresponding members and transmission manners in the different scenarios, so that the scheme of notification of the state of the small cell is determined.

## Description

### Technical Field

The present application relates to the wireless communication technology, and in particular, to a method and system for realizing notification of a state of a small cell.

### Background

With the rapid development of mobile Internet and the growing popularity of intelligent terminals, users' requirements for the data transmission rate and user experience are getting higher and higher. In order to improve the user awareness and system throughput, especially in order to improve the throughput of hot spots, networking architecture of a heterogeneous network can be used, i.e., a large number of small cells are deployed in a coverage region of a macro area.

The deployment of dense small cells is an effective mechanism to improve the network capacity and reduce the coverage holes, but also lead to serious interference between small cells and increase the energy consumption of base stations for the small cells. In order to reduce the mutual interference between the small cells and the energy consumption of the base stations for the small cells, the base stations for the small cells are allowed to enter a dormant state with low power consumption when they are not required to work. For example, when small cells do not have terminal connection or service transmission requirements, they may be allowed to enter a dormant state, i.e., not transmitting a control channel and a data channel and transmitting only a Discovery Reference Signal (DRS) and other necessary signals, to reduce interferences to neighboring small cells and the energy consumption of the base stations for the small cells.

At present, there are following several schemes about how to notify a state of a small cell to a mobile terminal (UE) during the cell small executes an ON/OFF operation: 1. explicit indication through Downlink Control Information (DCI); 2. implicit indication through a reference signal; 3. indication using an active time of a Discontinuous Reception (DRX) process; and 4. indication through activation/deactivation of enhanced Carrier Aggregation (CA). For how to notify the state of the small cell during the small cell executes an ON/OFF operation, a mainstream scheme is explicit notification through the downlink DCI information. Other schemes such as implicit notification by transmitting a reference signal, requiring the UE to detect the reference signal all the time, which will waste power consumption, and as some reference signals which are the same will be transmitted when the cell is turned on or turned off, it easily causes missed or false detection of the UE. The effects of the DRX scheme and the conventional carrier aggregation activation/deactivation scheme on ON/OFF switching time are undefined. Therefore, most manufacturers currently support the explicit DCI notification scheme.

Therefore, explicit indication to the UE using the DCI is an alternative scheme for notifying a state of a small cell. However, at present, there is no scheme about how to transmit a notification that a small cell executes an ON/OFF operation to the UE by using the DCI to realize notification of the state of the small cell.

### Summary of the Invention

In order to solve the abovementioned problem, embodiments of the present invention provide a method and system for realizing notification of a state of a small cell, which can achieve transmission of a notification that a small cell executes an ON/OFF operation to a UE by using DCI.

In order to achieve the purpose of the embodiments of the present invention, the embodiments of the present invention provide a method for realizing notification of a state of a small cell, the method includes following steps.

According to a carrier scenario in which cell state information is transmitted, determining corresponding members and transmission manners for transmitting cell state information for executing an ON/OFF operation to a User Equipment (UE), herein the cell state information is the cell state information for executing an ON/OFF operation; and

According to the determined members and transmission manners for transmitting the cell state information for executing an ON/OFF operation to the UE, transmitting the cell state information for executing an ON/OFF operation to complete the notification of the state of the small cell;
herein the members for transmitting the cell state information for executing an ON/OFF operation are Primary serving Cells (PCells), Secondary serving Cells (SCells) or small cells.

Alternatively, the carrier scenario is a Carrier Aggregation (CA) scenario, and determining corresponding members and transmission manners for transmitting cell state information for executing an ON/OFF operation to a UE includes the following steps.

A primary service cell (PCell) transmits to the UE through Downlink Control Information (DCI) in a periodic manner and/or in a triggered manner; or
a SCell which executes an ON/OFF operation transmitting to the UE by itself in a periodic manner and/or in a triggered manner, herein
the transmitted cell state information for executing an ON/OFF operation is SCell state information for executing an ON/OFF operation.

Alternatively, the carrier scenario is a single carrier scenario, and determining corresponding members and transmission manners for transmitting cell state information for executing an ON/OFF operation to a UE includes the following steps.

A small cell executes an ON/OFF operation transmitting to the UE by itself through DCI in a periodic manner and/or in a triggered manner and/or in a combined periodic and triggered manner.

Alternatively, the carrier scenario is a dual connection scenario. The determining corresponding members and transmission manners for transmitting cell state information which executes an ON/OFF operation to a UE includes the following step.

A SCell executes an ON/OFF operation transmitting to the UE by itself through DCI in a periodic manner and in a triggered manner.

Alternatively, the cell state information for executing an ON/OFF operation includes bit information of a corresponding on or OFF state of each of the small cells.

Alternatively, when turn-on time delays of the small cells are not fixed, the cell state information for executing an ON/OFF operation further includes bit information indicating a turn-on allowable delay time corresponding to each of the small cells.

When the states of the small cells change within a DCI notification period, the cell state information for executing an ON/OFF operation further includes bit information of a number of consecutive on sub frames corresponding to each of the small cells.

Alternatively, when turn-on time delays of the small cells are not fixed and the turn-on time delays are greater than one subframe, the cell state information for executing an ON/OFF operation further includes bit information indicating a turn-on allowable delay time corresponding to each of the small cells.

Alternatively, the method further includes the following steps.

The cell state information for executing an ON/OFF operation is transmitted through 1A/3/3A/1C in a DCI format.

The cell state information for executing an ON/OFF operation is transmitted through an idle bit of the 1A/3/3A/1C in the DCI format.

And the cell state information for executing an ON/OFF operation is transmitted in a brand new DCI format.

Alternatively, before transmitting the SCell state information for executing an ON/OFF operation, the method further includes the following steps: The cell state information is scrambled for an ON/OFF operation in a DCI format through a System Information-Radio Network Temporary Identifier (SI-RNTI), or through a Transmission Power Control-Radio Network Temporary Identifier (TPC-RNTI), or through a Paging-Radio Network Temporary Identifier (P-RNTI), or a new common RNTI, and then transmitting the scrambled state information for an ON/OFF operation to each corresponding group of UEs.

Alternatively, when the Primary serving Cell (PCells) transmits the SCell state information for executing an ON/OFF operation to the UE through the DCI in a triggered manner, the method includes the following cases.

When a state of the PCell is triggered to change, the PCell transmits the cell state information for executing an ON/OFF operation to the UE through the DCI.

When the state of the PCell is triggered to change, the PCell transmits the cell state information for executing an ON/OFF operation to the UE through the DCI at a periodic point after the PCell is triggered to be switched.

Herein the cell state information for executing an ON/OFF operation is the cell state information of a PCell which executes an ON/OFF operation.

Alternatively, when the Primary serving Cell (PCells) transmits the PCell state information for executing an ON/OFF operation to the UE through the DCI in a periodic manner and/or in a triggered manner, the UE is UEs of all the PCells.

When the Primary serving Cell (PCells) transmits the PCell state information for an ON/OFF operation to the UE through the DCI in a periodic manner and/or in a triggered manner, the UE is UEs of PCells whose states change, and the PCell state information for executing an ON/OFF operation further includes a Carrier Indicator Field.

Alternatively, when the Primary serving Cell (PCells) transmits the cell state information for executing an ON/OFF operation to the UE through the DCI in a triggered manner, the method includes the following cases.

When states of one or more SCells are triggered to change, the PCell transmits the cell state information for executing an ON/OFF operation to the UE through the DCI.

When the states of the one or more SCells are triggered to change, the PCell transmits the cell state information for executing an ON/OFF operation to the UE through the DCI at a periodic point after the SCells are triggered to be switched.

Alternatively, when the Primary serving Cell (PCells) transmits the cell state information for executing an ON/OFF operation to the UE through the DCI in a periodic manner and/or in a triggered manner, the UE is UEs of all the SCells.

When the PCell transmits the cell state information for executing an ON/OFF operation to the UE through the DCI in a periodic manner and/or in a triggered manner, the UE is UEs of SCells whose states change, and the SCell state information for executing an ON/OFF operation further includes a Carrier Indication Field CIF.

Alternatively, when the PCell transmits the cell state information for executing an ON/OFF operation to the UEs of all the SCells through the DCI in a periodic manner, a serial number of a small cell corresponding to the SCell state information for executing an ON/OFF operation is determined by a high layer, and is provided through SCEOnOff-Index.

When the PCell transmits the cell state information for executing an ON/OFF operation through the DCI in a triggered manner to the UEs of the SCells, and the states of UEs of the SCells change, a serial number of a small cell corresponding to the SCell state information for executing an ON/OFF operation is determined by a CIF.

Alternatively, the small cell transmitting the SCell state information for executing an ON/OFF operation by itself through the DCI in a triggered manner to the UE includes the following cases.

When states of one or more small cells are triggered to change, the small cell transmits the cell state information for executing an ON/OFF operation to the UE by itself through the DCI in a triggered manner.

When the states of the one or more small cells are triggered to change, the small cell transmits the cell state information for executing an ON/OFF operation to the UE by itself through the DCI in a triggered manner at a periodic point after the SCells are triggered to be switched.

Alternatively, before the small cell transmits the cell state information for executing an ON/OFF operation to the UE by itself through the DCI in a triggered manner at a periodic point after the SCells are triggered to be switched, the method further includes notifying a pattern in which the DCI occurs to the UE.

Alternatively, transmitting in a combined periodic and triggered manner includes the following cases.

When the small cell is in an ON state, the small cell transmits the cell state information for executing an ON/OFF operation through the DCI in a periodic manner. When the small cell is switched from an OFF state to an ON state, the small cell transmits the cell state information for executing an ON/OFF operation through the DCI in a triggered manner. When the small cell is in an OFF state, the small cell does not the cell state information for executing an ON/OFF operation.

When the small cell is in an ON state, the small cell does not transmit the cell state information for executing an ON/OFF operation. When the small cell is switched from an ON state to an OFF state, the small cell transmits the cell state information for executing an ON/OFF operation through the DCI in a triggered manner. When the small cell is in an OFF state, the small cell transmits the SCell state information for executing an ON/OFF operation through the DCI in a periodic manner.

Alternatively, when the UE cannot receive a message of the cell state information for executing an ON/OFF operation, the method further includes the following cases.

Determining a carrier scenario in which and a reason why the cell state information for executing an ON/OFF operation cannot be received.

When it is determined that the UE can receive the cell state information for executing an ON/OFF operation, transmitting the cell state information for executing an ON/OFF operation to the UE which cannot receive the cell state information for executing an ON/OFF operation according to the determined carrier scenario and reason.

Alternatively, when it is determined that the UE can receive the SCell state information for executing an ON/OFF operation, the method of transmitting the cell state information for executing an ON/OFF operation to the UE which cannot receive the cell state information for executing an ON/OFF operation according to the determined carrier scenario and reason includes the following cases:.

The carrier scenario is a single carrier scenario.

When it is determined that the reason why the cell state information for executing an ON/OFF operation cannot be received is that a new UE enters the small cell, at the time when the small cell determines that the UE can receive the cell state information for executing an ON/OFF operation.

The small cell transmits the cell state information for executing an ON/OFF operation to the UE by itself through the DCI in a periodic manner, and/or in a triggered manner, and/or in a combined periodic and triggered manner, or transmitting the cell state information for executing an ON/OFF operation to the UE through high-layer signaling.

When it is determined that the reason why the cell state information for executing an ON/OFF operation cannot be received is that the UE is in a DRX_off state, at the time when the small cell determines that the UE is switched to a receivable state, the small cell transmits the cell state information for executing an ON/OFF operation to the UE by itself through the DCI in a periodic manner, and/or in a triggered manner, and/or in a combined periodic and triggered manner.

When it is determined that the reason why the SCell state information for executing an ON/OFF operation cannot be received is that the UE misses receiving the SCell state information for executing an ON/OFF operation transmitted by the small cell due to newly entering a connected state from an idle state. When the small cell determines that the UE accesses, the small cell transmits the SCell state information for executing an ON/OFF operation to the UE by itself through the DCI in a periodic manner, and/or in a triggered manner, and/or in a combined periodic and triggered manner.

The carrier scenario is a CA scenario.

When it is determined that the reason why the cell state information for executing an ON/OFF operation cannot be received is that the UE is in a DRX_off state, at the time when the small cell determines that the UE is switched to a receivable state, the small cell transmits the cell state information for executing an ON/OFF operation to the UE by itself through the DCI in a periodic manner, and/or in a triggered manner, and/or in a combined periodic and triggered manner.

When the carrier scenario is a dual connection scenario,
and when it is determined that the reason why the SCell state information for executing an ON/OFF operation cannot be received is that the UE is in a DRX_off state, at the time when the small cell determines that the UE is switched to a receivable state, the small cell transmits the SCell state information for executing an ON/OFF operation to the UE by itself through the DCI in a periodic manner, and/or in a triggered manner, and/or in a combined periodic and triggered manner.

Alternatively, when the carrier scenario is a CA scenario, if a new UE enters the small cell, the method further includes the following steps.

The small cell transmits the cell state information for executing an ON/OFF operation to the UE in a triggered manner.

When a small cell is added as a SCell, the Primary serving Cell (PCells) transmits the cell state information for executing an ON/OFF operation to the UE through the DCI in a periodic manner and/or in a triggered manner. Or, the SCell which executes an ON/OFF operation transmits the cell state information for executing an ON/OFF operation to the UE by itself in a periodic manner and/or in a triggered manner. Or, the SCell is set to be in an OFF state, and the state information is determined thereof through a blind-detection signal or control information.

Alternatively, when the carrier scenario is a dual connection scenario, the method further includes the following steps.

When a Secondary eNodB (SeNB) adds a small cell to a range to which it belongs, a Main NodeB (MeNB) transmits the SCell state information for executing an ON/OFF operation to the UE. Or, the small cell transmits the cell state information for executing an ON/OFF operation to the UE by itself in a periodic manner and/or in a triggered manner so that the UE of the small cell performs detection and reception within the SeNB. Or the UE sets the SeNB to be in an OFF state and determines the state information thereof through a blind detection signal or control information.

Alternatively, the method further includes repeatedly transmitting the cell state information for executing an ON/OFF operation to the UE according to a preset number of times.

Alternatively, when the small cell is in an ON state, and the small cell needs to transmit the cell state information for executing an ON/OFF operation to the UE, the method further includes transmitting the cell state information for executing an ON/OFF operation to the UE through the DCI according to a DTX time.

In another aspect, the present application further provides a system for realizing notification of a state of a small cell, which includes a determination unit, a first transmission unit for a Primary serving Cell (PCells), a first transmission unit for a small cell, and a third transmission unit for a Secondary serving Cell (SCells).

Herein the determination unit is arranged to determine that the first transmission unit, or the second transmission unit or the third transmission unit transmits SCell state information for executing an ON/OFF operation in a corresponding transmission manner according to a carrier scenario in which the SCell state information for executing an ON/OFF operation is transmitted;

An indication unit is arranged to indicate the first transmission unit, or the second transmission unit, or the third transmission unit to transmit the SCell state information for executing an ON/OFF operation in a corresponding transmission manner.

The first transmission unit, or the second transmission unit, or the third transmission unit are arranged to transmit the cell state information for executing an ON/OFF operation to a User Equipment (UE) according to an indication of the determination unit, to complete the notification of the state of the small cell.

Alternatively, when the carrier scenario is a Carrier Aggregation (CA) scenario, the determination unit is arranged to determine that the first transmission unit transmits the cell state information for executing an ON/OFF operation through Downlink Control Information (DCI) in a periodic manner and/or in a triggered manner; or
the cell which executes an ON/OFF operation transmits the cell state information for executing an ON/OFF operation by itself through the DCI in a periodic manner and/or in a triggered manner.

The indication unit is arranged to transmit an indication to the first transmission unit according to the determination from the determination unit that the first transmission unit transmits the cell state information for executing an ON/OFF operation through the DCI in a periodic manner and/or in a triggered manner or that the cell which executes an ON/OFF operation transmits the cell state information for executing an ON/OFF operation by itself through the DCI in a periodic manner and/or in a triggered manner.

The first transmission unit includes a first periodic transmission module and a first triggered transmission module.

The first periodic transmission module is arranged to transmit the cell state information for executing an ON/OFF operation to the UE through the DCI in a periodic manner according to the indication of the indication unit.

The first triggered transmission module is arranged to transmit the cell state information for executing an ON/OFF operation to the UE through the DCI in a triggered manner according to the indication of the indication unit.

The transmitted cell state information for executing an ON/OFF operation is SCell state information for executing an ON/OFF operation.

Alternatively, when the carrier scenario is a single carrier scenario, the determination unit is arranged to determine that the second transmission unit transmits the cell state information for executing an ON/OFF operation by itself through DCI in a periodic manner and/or in a triggered manner and/or in a combined periodic and triggered manner.

The indication unit is arranged to transmit an indication to the second transmission unit according to the determination from the determination unit that the second transmission unit transmits the cell state information for executing an ON/OFF operation by itself through the DCI in a periodic manner and/or in a triggered manner and/or in a combined periodic and triggered manner.

The second transmission unit includes a second periodic transmission module and a second triggered transmission module.

Herein the second periodic transmission module is arranged to transmit the cell state information for executing an ON/OFF operation to the UE by itself through the DCI in a periodic manner according to the indication of the indication unit.

The second triggered transmission module is arranged to transmit the cell state information for executing an ON/OFF operation to the UE through the DCI in a triggered manner according to the indication of the indication unit.

The second periodic transmission module and the second triggered transmission module are further arranged to transmit the cell state information for executing an ON/OFF operation to the UE through the DCI in a combined periodic and triggered manner according to the indication of the indication unit.

Alternatively, when the carrier scenario is a dual connection scenario, the determination unit is arranged to
determine that the third transmission unit transmits the cell state information for executing an ON/OFF operation by itself through DCI in a periodic manner and/or in a triggered manner.

The indication unit is arranged to transmit an indication to the third transmission unit according to the determination from the determination unit that the third transmission unit transmits the cell state information for executing an ON/OFF operation by itself through the DCI in a periodic manner and/or in a triggered manner.

The third transmission unit comprises a third periodic transmission module and a third triggered transmission module.

Herein the third periodic transmission module is arranged to transmit the cell state information for executing an ON/OFF operation to the UE by itself through the DCI in a periodic manner according to the indication of the indication unit.

The third triggered transmission module is arranged to transmit the cell state information for executing an ON/OFF operation to the UE through the DCI in a triggered manner according to the indication of the indication unit.

Alternatively, the cell state information for executing an ON/OFF operation includes bit information of a corresponding on or OFF state of each of the small cells.

Alternatively, when turn-on time delays of the small cells are not fixed, the cell state information for executing an ON/OFF operation further includes bit information indicating a turn-on allowable delay time corresponding to each of the small cells.

When the states of the small cells change during a DCI notification period, the cell state information for executing an ON/OFF operation further includes bit information of a number of consecutive on subframes corresponding to each of the small cells.

Alternatively, when turn-on time delays of the small cells are not fixed and the turn-on time delays are greater than one subframe, the cell state information for executing an ON/OFF operation further includes bit information indicating a turn-on allowable delay time corresponding to each of the small cells.

Alternatively, the system further includes an adding unit which is arranged to add the cell state information for executing an ON/OFF operation in 1A/3/3A/1C in a DCI format for transmission, or is arranged to add the cell state information for executing an ON/OFF operation in an idle bit of the 1A/3/3A/1C in the DCI format for transmission,
or is arranged to add the cell state information for executing an ON/OFF operation in a brand new DCI format for transmission.

Alternatively, the system further includes a scrambling unit which is arranged to, before transmitting the cell state information for executing an ON/OFF operation, scramble the cell state information for an ON/OFF operation in a DCI format through a System Information-Radio Network Temporary Identifier (SI-RNTI), a Transmission Power Control-Radio Network Temporary Identifier (TPC-RNTI), or a Paging-Radio Network Temporary Identifier (P-RNTI), or a new common RNTI, and then transmit the scrambled state information to each corresponding group of UEs.

Alternatively, when the Primary serving Cells (PCells) PCell transmits the SCell state information for executing an ON/OFF operation to the UE through the DCI in a triggered manner, the following steps are includes.

When a state of the PCell is triggered to change, the PCell transmits the cell state information for executing an ON/OFF operation to the UE through the DCI.

When the state of the PCell is triggered to change, the PCell transmits the cell state information for executing an ON/OFF operation to the UE through the DCI at a periodic point after the PCell is triggered to be switched,
the cell state information for executing an ON/OFF operation is PCell state information for executing an ON/OFF operation.

Alternatively, the determination unit is arranged to, when states of one or more SCells are triggered to change, determine that the first triggered transmission module transmits the cell state information for executing an ON/OFF operation through the DCI,
or determine that the first triggered transmission module transmits the cell state information for executing an ON/OFF operation through the DCI at a periodic point after the SCells are triggered to be switched.

Alternatively, the determination unit is further arranged to, when it is determined that the first periodic transmission module and/or the first triggered transmission module transmits the cell state information for executing an ON/OFF operation, determine that the UE is UEs of all the SCells.

When it is determined that the Primary serving Cell (PCells) transmits the cell state information for executing an ON/OFF operation through the DCI in a periodic manner and/or in a triggered manner, determine that the UE is UEs of SCells whose states change, and the cell state information for executing an ON/OFF operation further includes a Carrier Indicator Field (CIF).

Alternatively, when the first periodic transmission module transmits the cell state information for executing an ON/OFF operation to the UEs of all the SCells, a serial number of a small cell corresponding to the SCell state information for executing an ON/OFF operation is decided by a high layer, and is provided through SCEOnOff-Index.

When the first triggered transmission module transmits the SCell state information for executing an ON/OFF operation to the UEs of the SCells, and states of the UEs of the SCells change, a serial number of a small cell corresponding to the SCell state information for executing an ON/OFF operation is determined by a CIF.

Alternatively, the determination unit is arranged to, when states of one or more small cells are triggered to change, determine that the second triggered transmission module transmits the cell state information for executing an ON/OFF operation through the DCI, or determine that the second triggered transmission module transmits the cell state information for executing an ON/OFF operation through the DCI at a periodic point after the SCells are triggered to be switched.

The second triggered transmission module is arranged to transmit the cell state information for executing an ON/OFF operation to the UE through the DCI or transmit the cell state information for executing an ON/OFF operation through the DCI at a periodic point after the SCells are triggered to be switched.

Alternatively, the system further includes a notification pattern unit which is arranged to, before the second triggered transmission module transmits the cell state information for executing an ON/OFF operation to the UE through the DCI at a periodic point after the SCells are triggered to be switched, notify a pattern in which the DCI occurs to the UE.

Alternatively, transmitting in a combined periodic and triggered manner includes the following cases.

When the small cell is in an ON state, the small cell transmits the cell state information for executing an ON/OFF operation through the DCI in a periodic manner. When the small cell is switched from an OFF state to an ON state, the small cell transmits the cell state information for executing an ON/OFF operation through the DCI in a triggered manner. When the small cell is in an OFF state, the small cell does not transmit the cell state information for executing an ON/OFF operation.

When the small cell is in an ON state, the small cell does not transmit the cell state information for executing an ON/OFF operation. When the small cell is switched from an ON state to an OFF state, the small cell transmits the cell state information for executing an ON/OFF operation through the DCI in a triggered manner. When the small cell is in an OFF state, the small cell transmits the SCell state information for executing an ON/OFF operation through the DCI in a periodic manner.

Alternatively, the system further includes a judgment unit and a processing unit.

Herein the judgment unit is arranged to, when the UE cannot receive a message of the cell state information for executing an ON/OFF operation, determine a carrier scenario in which and a reason why the cell state information for executing an ON/OFF operation cannot be received.

The processing unit is arranged to, when it is determined that the UE can receive the cell state information for executing an ON/OFF operation, transmit the cell state information for executing an ON/OFF operation to the UE which cannot receive the cell state information for executing an ON/OFF operation according to the determined carrier scenario and reason.

Alternatively, the carrier scenario is a single carrier scenario.

The judgment unit is arranged to determine that the reason why the cell state information for executing an ON/OFF operation cannot be received is that a new UE enters the small cell.

The processing unit is arranged to, according to the determination that the reason why the cell state information for executing an ON/OFF operation cannot be received is that a new UE enters the small cell, at the time when the small cell determines that the UE can receive the cell state information for executing an ON/OFF operation, determine that the second periodic transmission module transmits the cell state information for executing an ON/OFF operation to the UE, and/or the second triggered transmission module transmits the cell state information for executing an ON/OFF operation to the UE, and/or the second periodic transmission module and the second triggered transmission module transmit the cell state information for executing an ON/OFF operation to the UE in a combined periodic and triggered manner and/or transmit the cell state information for executing an ON/OFF operation to the UE through high-layer signaling.

The judgment unit is arranged to determine that the reason why the cell state information for executing an ON/OFF operation cannot be received is that the UE is in a DRX_off state.

The processing unit is arranged to, according to the determination that the reason why the cell state information for executing an ON/OFF operation cannot be received is that the UE is in a DRX_off state, at the time when the small cell determines that the UE is switched to a receivable state, determine that the second periodic transmission module transmits the cell state information for executing an ON/OFF operation to the UE, and/or the second triggered transmission module transmits the cell state information for executing an ON/OFF operation to the UE, and/or the second periodic transmission module and the second triggered transmission module transmit the cell state information for executing an ON/OFF operation to the UE in a combined periodic and triggered manner; and

The judgment unit is arranged to determine that the reason why the cell state information for executing an ON/OFF operation cannot be received is that the UE misses receiving the SCell state information for an ON/OFF operation transmitted by the small cell due to newly entering a connected state from an idle state.

The processing unit is arranged to, according to the determination that the reason why the cell state information for executing an ON/OFF operation cannot be received is that the UE misses receiving the cell state information for an ON/OFF operation transmitted by the small cell due to newly entering a connected state from an idle state, at the time when the small cell determines that the UE accesses, determine that the second periodic transmission module transmits the cell state information for executing an ON/OFF operation to the UE, and/or the second triggered transmission module transmits the cell state information for executing an ON/OFF operation to the UE, and/or the second periodic transmission module and the second triggered transmission module transmit the cell state information for executing an ON/OFF operation to the UE in a combined periodic and triggered manner.

When the carrier scenario is a CA scenario,
the judgment unit is arranged to determine that the reason why the cell state information for executing an ON/OFF operation cannot be received is that the UE is in a DRX_off state; and
the processing unit is arranged to, according to the determination that the reason why the cell state information for executing an ON/OFF operation cannot be received is that the UE is in a DRX_off state, at the time when the small cell determines that the UE is switched to a receivable state, determine that the second periodic transmission module transmits the cell state information for executing an ON/OFF operation to the UE, and/or the second triggered transmission module transmits the cell state information for executing an ON/OFF operation to the UE, and/or the second periodic transmission module and the second triggered transmission module transmit the cell state information for executing an ON/OFF operation to the UE in a combined periodic and triggered manner.

When the carrier scenario is a dual connection scenario,
the judgment unit is arranged to determine that the reason why the cell state information for executing an ON/OFF operation cannot be received is that the UE is in a DRX_off state; and
the processing unit is arranged to, according to the determination that the reason why the cell state information for executing an ON/OFF operation cannot be received is that the UE is in a DRX_off state, at the time when the small cell determines that the UE is switched to a receivable state, determine that the second periodic transmission module transmits the SCell state information for executing an ON/OFF operation to the UE, and/or the second triggered transmission module transmits the SCell state information for executing an ON/OFF operation to the UE, and/or the second periodic transmission module and the second triggered transmission module transmit the SCell state information for executing an ON/OFF operation to the UE in a combined periodic and triggered manner.

Alternatively, the determination unit is further arranged to, when it is determined that the first periodic transmission module and/or the first triggered transmission module transmits the PCell state information for executing an ON/OFF operation, the UE is UEs of all the SCells.

When it is determined that the Primary serving Cell (PCells) transmits the PCell state information for executing an ON/OFF operation through the DCI in a periodic manner and/or in a triggered manner, the UE is UEs of SCells whose states change, and the cell state information for executing an ON/OFF operation further comprises a Carrier Indicator Field (CIF).

Alternatively, when the carrier scenario is a CA scenario, the second triggered module is further arranged to, at the time when a new UE enters the small cell, transmit the cell state information for executing an ON/OFF operation to the UE.

When a small cell is added as a SCell, the first periodic transmission module and/or the first triggered transmission module is arranged to transmit the cell state information for executing an ON/OFF operation to the UE. Or the third periodic transmission module and/or the third triggered transmission module is arranged to transmit the cell state information for executing an ON/OFF operation to the UE. Or the SCell is set to be in an OFF state, and the state information is determined thereof through a blind-detection signal or control information.

Alternatively, when the carrier scenario is a dual connection scenario, the system further includes a Main eNodeB (MeNB) and a Secondary eNodB (SeNB).

Herein the SeNB is arranged to add a small cell to a range to which it belongs.

The MeNB is arranged to, when the SeNB adds a small cell to a range to which it belongs, transmit the cell state information for executing an ON/OFF operation to the UE.
the second periodic transmission module and/or the second triggered transmission module is arranged to, when the SeNB adds a small cell to a range to which it belongs, transmit the cell state information for executing an ON/OFF operation to the UE so that the UE of the small cell performs detection and reception within the SeNB.

Alternatively, the system further includes a transmission times unit which is arranged to preset a number of times, and repeatedly transmit the SCell state information for executing an ON/OFF operation to the UE.

Alternatively, the system further includes a time unit arranged to, when the small cell is in an ON state, and the small cell needs to transmit the cell state information for executing an ON/OFF operation to the UE, transmit the cell state information for executing an ON/OFF operation to the UE through the DCI according to a DTX time.

The embodiments of the present invention further provide a computer program including program instructions, when executed by a computer, cause the computer to perform the method as described above.

The embodiments of the present invention further provide a carrier having the computer program as described above therein.

Compared with the related technology, the technical schemes according to the embodiments of the present invention include the following steps. According to a carrier scenario in which cell state information for executing an ON/OFF operation is transmitted, corresponding members and transmission manners for transmitting cell state information is determined for executing an ON/OFF operation to a User Equipment (UE). According to the determined members and transmission manners for transmitting the cell state information for executing an ON/OFF operation to the UE, the cell state information for executing an ON/OFF operation is transmitted to complete the notification of the state of the small cell. Herein the members for transmitting the cell state information for executing an ON/OFF operation are Primary serving Cells (PCells), Secondary serving Cells (SCells) or small cells. The embodiments of the present invention transmit the cell state information for executing an ON/OFF operation to a UE by using corresponding members and transmission manners in the different scenarios, so that the transmission scheme of the cell state information for executing an ON/OFF operation is determined, and the small cell completes the ON/OFF operation according to the cell state information for an ON/OFF operation.

### Brief Description of Drawings

Fig. 1 is a flowchart of a method for realizing notification of a state of a small cell according to an embodiment of the present invention; and
Fig. 2 is a structural block diagram of a system for realizing notification of a state of a small cell according to an embodiment of the present invention.

### Detailed Description

The embodiments of the present application will be described below in detail with reference to accompanying drawings. It should be illustrated that the embodiments in the present application and the features in the embodiments can be combined with each other randomly without conflict.

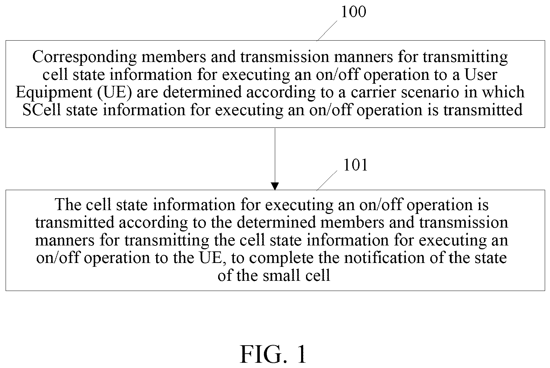

Fig. 1 is a flowchart of a method for realizing notification of a state of a small cell according to an embodiment of the present invention. Herein, as shown in Fig. 1, the method includes the following steps.

In step 100, corresponding members and transmission manners for transmitting cell state information for executing an ON/OFF operation to a User Equipment (UE) are determined according to a carrier scenario in which cell state information is transmitted, herein the cell state information is the cell state information for executing an ON/OFF operation.

Here, the members for transmitting the SCell state information for executing an ON/OFF operation are Primary serving Cells (PCells), Secondary serving Cells (SCells) or small cells.

It should be illustrated that the carrier scenario here refers to a Carrier Aggregation (CA) scenario, a single carrier scenario, and a dual connection scenario, etc.

Alternatively, the carrier scenario is a Carrier Aggregation (CA) scenario, and determining corresponding members and transmission manners for transmitting cell state information for executing an ON/OFF operation to a UE includes the following cases.

A PCell transmits to the UE through Downlink Control Information (DCI) in a periodic manner and/or in a triggered manner.

A SCell which executes an ON/OFF operation transmits to the UE by itself in a periodic manner and/or in a triggered manner.

Here, the transmitted cell state information for executing an ON/OFF operation is SCell state information for executing an ON/OFF operation.

When the Primary serving Cell (PCells) transmits the SCell state information for executing an ON/OFF operation to the UE through the DCI in a triggered manner, the method includes the following steps.

When a state of the PCell is triggered to change, the PCell transmits the cell state information for executing an ON/OFF operation to the UE through the DCI.

When the state of the PCell is triggered to change, the PCell transmits the cell state information for executing an ON/OFF operation to the UE through the DCI at a periodic point after the PCell is triggered to be switched.

The cell state information for executing an ON/OFF operation is cell state information of a PCell which executes an ON/OFF operation.

When the PCell transmits the PCell state information for executing an ON/OFF operation to the UE through the DCI in a periodic manner and/or in a triggered manner, the UE is UEs of all the PCells.

When the PCell transmits the PCell state information for an ON/OFF operation to the UE through the DCI in a periodic manner and/or in a triggered manner, the UE is UEs of PCells of which states change, and the PCell state information for executing an ON/OFF operation further comprises a Carrier Indicator Field (CIF for short).

When the PCell transmits the cell state information for executing an ON/OFF operation to the UE through the DCI in a triggered manner, the method includes the follow cases.

When states of one or more SCells are triggered to change, the PCell transmits the cell state information for executing an ON/OFF operation to the UE through the DCI.

When the states of the one or more SCells are triggered to change, the PCell transmitting the cell state information for executing an ON/OFF operation to the UE through the DCI at a periodic point after the SCells are triggered to be switched.

Alternatively, when the Primary serving Cell (PCells) transmits the cell state information for executing an ON/OFF operation to the UE through the DCI in a periodic manner and/or in a triggered manner, the UE is UEs of all the SCells.

Alternatively, when the PCell transmits the cell state information for executing an ON/OFF operation to the UE through the DCI in a periodic manner and/or in a triggered manner, the UE is UEs of SCells whose states change, and the SCell state information for executing an ON/OFF operation further includes a Carrier Indicator Field CIF.

It should be illustrated that when the cell state information for executing an ON/OFF operation is transmitted to the UEs of all the SCells, content related to the cell state information for executing an ON/OFF operation includes bit information of a corresponding ON/OFF state of each small cell. When a turn-on time delay of the small cell is not fixed, the SCell state information for an ON/OFF operation further includes bit information indicating a turn-on allowable delay time corresponding to each small cell. When the small cell is switched from an OFF state to an ON state, the small cell transmits the SCell state information for executing an ON/OFF operation through the DCI in a triggered manner, which does not include a carrier indicator field.

When the PCell transmits the cell state information for executing an ON/OFF operation to the UEs of all the SCells through the DCI in a periodic manner, a serial number of a small cell corresponding to the SCell state information for executing an ON/OFF operation is decided by a high layer, and is provided through SCEOnOff-Index. The SCEOnOff-Index represents a serial number of a small cell for which the UE is notified of an ON/OFF state of a corresponding small cell using the DCI.

When the Primary serving Cells (PCells) transmits the cell state information for executing an ON/OFF operation through the DCI in a triggered manner to the UEs of the SCells, and the states of UEs of the SCells change, a serial number of a small cell corresponding to the SCell state information for executing an ON/OFF operation is decided by a Carrier Indicator Field CIF.

It should be illustrated that the serial number of the small cell corresponding to the SCell state information for executing an ON/OFF operation is given by the SCEOnOff-Index which is decided to be provided by an upper layer, so that the UE knows the ON/OFF operation of the corresponding cell. Here, decision of the serial number of the small cell by the high layer refers to that signaling of the high layer of the small cell includes the serial number of the small cell, which belongs to common knowledge for those skilled in the art. As the data frame used by the signaling of the higher layer is large, the small cell number can be determined by the carrier indication field (CIF) when only the SCell state information for executing an ON/OFF operation is transmitted to UEs of SCells with changes, the serial number of the small cell may be determined by the Carrier Indicator Field (CIF) which uses a small data frame, so as to achieve the purpose of reducing resource consumption.

Alternatively,
the carrier scenario is a single carrier scenario, and determining corresponding members and transmission manners for transmitting cell state information for executing an ON/OFF operation to a UE includes the following steps.

A small cell which executes an ON/OFF operation transmits to the UE by itself through DCI in a periodic manner and/or in a triggered manner and/or in a combined periodic and triggered manner.

The small cell transmits the SCell state information for executing an ON/OFF operation by itself through the DCI in a triggered manner to the UE includes the following step.

When states of one or more small cells are triggered to change, the small cell transmits the cell state information for executing an ON/OFF operation to the UE by itself through the DCI in a triggered manner.

When the states of the one or more small cells are triggered to change, the small cell transmits the cell state information for executing an ON/OFF operation to the UE by itself through the DCI in a triggered manner at a periodic point after the SCells are triggered to be switched.

Before the small cell transmits the cell state information for executing an ON/OFF operation to the UE by itself through the DCI in a triggered manner at a periodic point after the SCells are triggered to be switched, the method according to the embodiments of the present invention further includes notifying a pattern in which the DCI occurs to the UE.

Alternatively, transmitting in a combined periodic and triggered manner includes the following cases.

When the small cell is in an ON state, the small cell transmits the cell state information for executing an ON/OFF operation through the DCI in a periodic manner. When the small cell is switched from an OFF state to an ON state, the small cell transmits the cell state information for executing an ON/OFF operation through the DCI in a triggered manner. When the small cell is in an OFF state, the small cell does not transmit the cell state information for executing an ON/OFF operation.

When the small cell is in an ON state, the small cell does not transmit the cell state information for executing an ON/OFF operation. When the small cell is switched from an ON state to an OFF state, the small cell transmits the cell state information for executing an ON/OFF operation through the DCI in a triggered manner. When the small cell is in an OFF state, the small cell transmits the SCell state information for executing an ON/OFF operation through the DCI in a periodic manner.

Alternatively, the carrier scenario is a dual connection scenario. Determining corresponding members and transmission manners for transmitting cell state information which executes an ON/OFF operation to a UE includes the following steps.

A SCell which executes an ON/OFF operation transmitting to the UE by itself through DCI in a periodic manner and in a triggered manner.

In step 101, the cell state information for executing an ON/OFF operation is transmitted according to the determined members and transmission manners for transmitting the cell state information for executing an ON/OFF operation to the UE, so as to complete the notification of the state of the small cell.

It should be illustrated that when transmission of the SCell state information for executing an ON/OFF operation to the UE is completed, the notification of the state of the small cell is completed.

In the above three scenarios, the cell state information for executing an ON/OFF operation includes bit information of a corresponding on or OFF state of each small cell.

When turn-on time delays of the small cells are not fixed, the SCell state information for executing an ON/OFF operation further comprises bit information indicating a turn-on allowable delay time corresponding to each of the small cells.

Alternatively, when turn-on time delays of the small cells are not fixed and the turn-on time delays are greater than one subframe, the SCell state information for executing an ON/OFF operation further includes bit information indicating a turn-on allowable delay time corresponding to each of the small cells.

It should be illustrated that if the present application represents the turn-on allowable delay time of the small cell through bits, for example, immediate turn on, turn on after a delay of one subframe, turn on after a delay of two subframes, and turn on after a delay of four subframes, it may be represented by 2 bits. That is, "00" represents immediate turn on, "01" represents turn on after a delay of one subframe, "10" represents turn on after a delay of two subframes, and "11" represents turn on after a delay of four subframes. In addition, the maximum allowable delay duration of the small cell is 20 subframes, which is represented by 5bit information.

When the states of the small cells change within a DCI notification period, the SCell state information for executing an ON/OFF operation further includes bit information of a number of consecutive on subframes corresponding to each of the small cells.

Here, by taking the DCI period being 10ms as an example, a number of consecutive on subframes in a period is at most 10 subframes, which is identified by 4 bits.

The method according to the embodiments of the present invention further includes transmitting the cell state information for executing an ON/OFF operation through 1A/3/3A/1C in a DCI format.

The cell state information for executing an ON/OFF operation is transmitted through an idle bit of the 1A/3/3A/1C in the DCI format.

The cell state information for executing an ON/OFF operation is transmitted in a brand new DCI format. It should be illustrated that, the new DCI format here at least needs to include a corresponding field in each scenario.

It should be illustrated that, the 1A/3/3A/1C in the DCI format refers to a DCI format specified according to the protocol, and the DCI format specified by the protocol belongs to common knowledge for those skilled in the art, which will not be repeated here.

Before transmitting the SCell state information for executing an ON/OFF operation, the method according to the embodiments of the present invention further includes scrambling the cell state information for an ON/OFF operation in a DCI format through a System Information-Radio Network Temporary Identifier (SI-RNTI), a Transmission Power Control-Radio Network Temporary Identifier (TPC-RNTI), or a Paging-Radio Network Temporary Identifier (P-RNTI), or a new common RNTI, and then transmitting the scrambled state information to each corresponding group of UEs.

When the UE cannot receive a message of the cell state information for executing an ON/OFF operation, the method according to the embodiments of the present invention further includes the following cases.

A carrier scenario in which and a reason why the cell state information for executing an ON/OFF operation cannot be received is determined.

When it is determined that the UE can receive the cell state information for executing an ON/OFF operation, the cell state information for executing an ON/OFF operation to the UE which cannot receive the cell state information is transmitted for executing an ON/OFF operation according to the determined carrier scenario and reason.

The following steps are included.

The carrier scenario is a single carrier scenario.

When it is determined that the reason why the cell state information for executing an ON/OFF operation cannot be received is that a new UE enters the small cell, at the time when the small cell determines that the UE can receive the cell state information for executing an ON/OFF operation.

The small cell transmits the cell state information for executing an ON/OFF operation to the UE by itself through the DCI in a periodic manner, and/or in a triggered manner, and/or in a combined periodic and triggered manner, or transmitting the cell state information for executing an ON/OFF operation to the UE through high-layer signaling.

When it is determined that the reason why the cell state information for executing an ON/OFF operation cannot be received is that the UE is in a DRX_off state, at the time when the small cell determines that the UE is switched to a receivable state, the small cell transmitting the cell state information for executing an ON/OFF operation to the UE by itself through the DCI in a periodic manner, and/or in a triggered manner, and/or in a combined periodic and triggered manner.

When it is determined that the reason why the SCell state information for executing an ON/OFF operation cannot be received is that the UE misses receiving the SCell state information for executing an ON/OFF operation transmitted by the small cell due to newly entering a connected state from an idle state, at the time when the small cell determines that the UE accesses, the small cell transmits the SCell state information for executing an ON/OFF operation to the UE by itself through the DCI in a periodic manner, and/or in a triggered manner, and/or in a combined periodic and triggered manner.

The carrier scenario is a CA scenario,

When it is determined that the reason why the cell state information for executing an ON/OFF operation cannot be received is that the UE is in a DRX_off state, at the time when the small cell determines that the UE is switched to a receivable state, the small cell transmitting the cell state information for executing an ON/OFF operation to the UE by itself through the DCI in a periodic manner, and/or in a triggered manner, and/or in a combined periodic and triggered manner.

The carrier scenario is a dual connection scenario.

When it is determined that the reason why the SCell state information for executing an ON/OFF operation cannot be received is that the UE is in a DRX_off state, at the time when the small cell determines that the UE is switched to a receivable state, the small cell transmitting the SCell state information for executing an ON/OFF operation to the UE by itself through the DCI in a periodic manner, and/or in a triggered manner, and/or in a combined periodic and triggered manner.

It should be illustrated that the determination that a new UE enters a small cell is acquired by a real-time detection process of a base station of the small cell, which is a commonly-used technical measure for those skilled in the art, and will not be repeated here. The high layer signaling notification here may use well-known signaling notification, such as RRC signaling notification, i.e., adding the SCell state information for executing an ON/OFF operation in the RRC signaling.

The determination that the UE is in a DRX_off state is also acquired by a real-time detection process of a base station of the small cell, which belongs to the conventional technical measure means for those skilled in the art, and will not be repeated here.

The determination that the UE misses receiving the SCell state information for executing an ON/OFF operation transmitted by the small cell due to newly entering a connected state from an idle state is also acquired by comparison between a time for the UE to enter a connected state from an idle state and a time for transmitting the SCell state information for executing an ON/OFF operation, which belongs to the conventional technical means for those skilled in the art, and will not be repeated here.

The method according to the embodiments of the present invention further includes: when the carrier scenario is a CA scenario, if a new UE enters the small cell, the method further includes the following cases. The small cell transmits the cell state information for executing an ON/OFF operation to the UE in a triggered manner.

When a small cell is added as a SCell, the PCell transmits the cell state information for executing an ON/OFF operation to the UE through the DCI in a periodic manner and/or in a triggered manner. Or the SCell which executes an ON/OFF operation transmits the cell state information for executing an ON/OFF operation to the UE by itself in a periodic manner and/or in a triggered manner, or the SCell is set to be in an OFF state, and the state information is determined thereof through a blind-detection signal or control information.

It should be illustrated that it is a conventional technical means for those skilled in the art to determine the state information thereof through the blind detection signal or the control information, and will not be repeated here.

When the carrier scenario is a dual connection scenario, the method according to the embodiments of the present invention further includes the following steps.

When a Secondary eNodB (SeNB) adds a small cell to a range to which it belongs, a Main NodeB (MeNB) transmits the SCell state information for executing an ON/OFF operation to the UE. Or the small cell transmits the cell state information for executing an ON/OFF operation to the UE by itself in a periodic manner and/or in a triggered manner so that the UE of the small cell performs detection and reception within the SeNB. Or the UE sets the SeNB to be in an OFF state and determines the state information thereof through a blind detection signal or control information.

The method according to the embodiments of the present invention further includes repeatedly transmitting the cell state information for executing an ON/OFF operation to the UE according to a preset number of times.

It should be illustrated that, by setting a number of times of retransmission, the cell state information for executing an ON/OFF operation is transmitted to the UE for many times, which improves the reliability of the notification.

When the small cell is in an ON state, the small cell needs to transmit the SCell state information for executing an ON/OFF operation to the UE. The method according to the embodiments of the present invention further includes transmitting the cell state information for executing an ON/OFF operation to the UE through the DCI according to the Discontinuous Transmission DTX time.

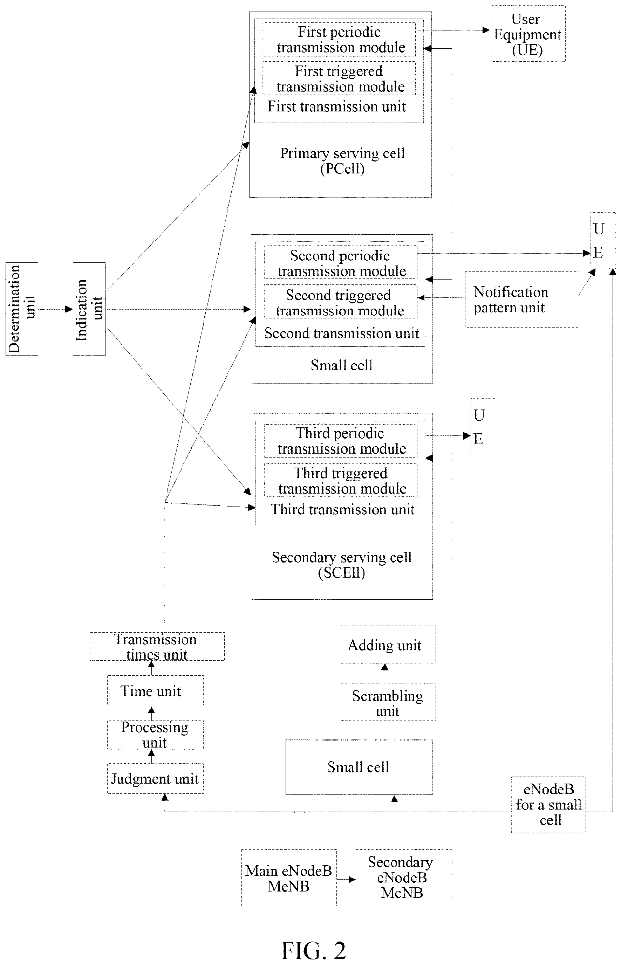

Fig. 2 is a structural block diagram of a system for realizing notification of a state of a small cell according to an embodiment of the present invention. As shown in Fig. 2, the system includes the following units:
A determination unit, a first transmission unit for a Primary serving Cells (PCells), a first transmission unit for a small cell, and a third transmission unit for a Secondary serving Cells (SCells), wherein,
The determination unit is arranged to determine that the first transmission unit, or the second transmission unit or the third transmission unit transmits SCell state information for executing an ON/OFF operation in a corresponding transmission manner according to a carrier scenario in which the SCell state information for executing an ON/OFF operation is transmitted.

An indication unit is arranged to indicate the first transmission unit, or the second transmission unit, or the third transmission unit to transmit the SCell state information for executing an ON/OFF operation in a corresponding transmission manner.

The first transmission unit, or the second transmission unit, or the third transmission unit is arranged to transmit the cell state information for executing an ON/OFF operation to a User Equipment (UE) according to an indication of the determination unit, to complete the notification of the state of the small cell.

The UE receives the cell state information for executing an ON/OFF operation to acquire the state of the small cell.

When the carrier scenario is a Carrier Aggregation (CA) scenario, the determination unit is arranged to
determine that the first transmission unit transmits the cell state information for executing an ON/OFF operation through Downlink Control Information (DCI) in a periodic manner and/or in a triggered manner.

The cell which executes an ON/OFF operation transmits the cell state information for executing an ON/OFF operation by itself through the DCI in a periodic manner and/or in a triggered manner.

The indication unit is arranged to transmit an indication to the first transmission unit according to the determination from the determination unit that the first transmission unit transmits the cell state information for executing an ON/OFF operation through the DCI in a periodic manner and/or in a triggered manner. The cell which executes an ON/OFF operation transmits the cell state information for executing an ON/OFF operation by itself through the DCI in a periodic manner and/or in a triggered manner.

The first transmission unit includes a first periodic transmission module and a first triggered transmission module.

The first periodic transmission module is arranged to transmit the cell state information for executing an ON/OFF operation to the UE through the DCI in a periodic manner according to the indication of the indication unit.

The first triggered transmission module is arranged to transmit the cell state information for executing an ON/OFF operation to the UE through the DCI in a triggered manner according to the indication of the indication unit.

The transmitted cell state information for executing an ON/OFF operation is SCell state information for executing an ON/OFF operation.

When the Primary serving Cells (PCells) transmits the SCell state information for executing an ON/OFF operation to the UE through the DCI in a triggered manner, the following steps are included.

When a state of the PCell is triggered to change, the PCell transmits the cell state information for executing an ON/OFF operation to the UE through the DCI.

When the state of the PCell is triggered to change, the PCell transmits the cell state information for executing an ON/OFF operation to the UE through the DCI at a periodic point after the PCell is triggered to be switched.

Herein the cell state information for executing an ON/OFF operation is cell PCell state information for executing an ON/OFF operation.

The determination unit is arranged to, when states of one or more SCells are triggered to change, determine that the first triggered transmission module transmits the cell state information for executing an ON/OFF operation through the DCI,
and is arranged to determine that the first triggered transmission module transmits the cell state information for executing an ON/OFF operation through the DCI at a periodic point after the SCells are triggered to be switched.

The determination unit is further arranged to, when it is determined that the first periodic transmission module and/or the first triggered transmission module transmits the cell state information for executing an ON/OFF operation, determine that the UE is UEs of all the SCells.

When it is determined that the PCell transmits the cell state information for executing an ON/OFF operation through the DCI in a periodic manner and/or in a triggered manner, determine that the UE is UEs of SCells and the states of the UE is UEs of SCells change, and the cell state information for executing an ON/OFF operation further includes a Carrier Indicator Field (CIF).

When the first periodic transmission module transmits the cell state information for executing an ON/OFF operation to the UEs of all the SCells, a serial number of a small cell corresponding to the SCell state information for executing an ON/OFF operation is decided by a high layer, and is provided through SCEOnOff-Index.

When the first triggered transmission module transmits the SCell state information for executing an ON/OFF operation to the UEs of the SCells and the states of the UEs of the SCells change, a serial number of a small cell corresponding to the SCell state information for executing an ON/OFF operation is determined by a Carrier Indicator Field CIF.

When the carrier scenario is a single carrier scenario, the determination unit is arranged to be as follows.

The second transmission unit is determined to transmit the cell state information for executing an ON/OFF operation by itself through DCI in a periodic manner and/or in a triggered manner and/or in a combined periodic and triggered manner;

The indication unit is arranged to transmit an indication to the second transmission unit according to the determination from the determination unit that the second transmission unit transmits the cell state information for executing an ON/OFF operation by itself through the DCI in a periodic manner and/or in a triggered manner and/or in a combined periodic and triggered manner.

The second transmission unit includes a second periodic transmission module and a second triggered transmission module.

The second periodic transmission module is arranged to transmit the cell state information for executing an ON/OFF operation to the UE by itself through the DCI in a periodic manner according to the indication of the indication unit.

The second triggered transmission module is arranged to transmit the cell state information for executing an ON/OFF operation to the UE through the DCI in a triggered manner according to the indication of the indication unit.

The second periodic transmission module and the second triggered transmission module are further arranged to transmit the cell state information for executing an ON/OFF operation to the UE through the DCI in a combined periodic and triggered manner according to the indication of the indication unit.

The determination unit is arranged to, when states of one or more small cells are triggered to change, determine that the second triggered transmission module transmits the cell state information for executing an ON/OFF operation through the DCI. Or the determination unit is arranged to determine that the second triggered transmission module transmits the cell state information for executing an ON/OFF operation through the DCI at a periodic point after the SCells are triggered to be switched.

The second triggered transmission module is arranged to transmit the cell state information for executing an ON/OFF operation to the UE through the DCI or transmit the cell state information for executing an ON/OFF operation through the DCI at a periodic point after the SCells are triggered to be switched.

The system according to the embodiments of the present invention further includes a notification pattern unit that is arranged to, before the second triggered transmission module transmits the cell state information for executing an ON/OFF operation to the UE through the DCI at a periodic point after the SCells are triggered to be switched, notify a pattern in which the DCI occurs to the UE.

Transmitting in a combined periodic and triggered manner includes the following steps.

When the small cell is in an ON state, the small cell transmits the cell state information for executing an ON/OFF operation through the DCI in a periodic manner. When the small cell is switched from an OFF state to an ON state, the small cell transmits the cell state information for executing an ON/OFF operation through the DCI in a triggered manner. And when the small cell is in an OFF state, the small cell not transmits the cell state information for executing an ON/OFF operation.

Or, when the small cell is in an ON state, the small cell does not transmit the cell state information for executing an ON/OFF operation. When the small cell is switched from an ON state to an OFF state, the small cell transmits the cell state information for executing an ON/OFF operation through the DCI in a triggered manner. And when the small cell is in an OFF state, the small cell transmits the SCell state information for executing an ON/OFF operation through the DCI in a periodic manner.

When the carrier scenario is a dual connection scenario,
the determination unit is arranged to be as follows.

The third transmission unit is determined to transmit the cell state information for executing an ON/OFF operation by itself through DCI in a periodic manner and/or in a triggered manner;
the indication unit is arranged to transmit an indication to the third transmission unit according to the determination from the determination unit that the third transmission unit transmits the cell state information for executing an ON/OFF operation by itself through the DCI in a periodic manner and/or in a triggered manner.

The third transmission unit includes a third periodic transmission module and a third triggered transmission module.

The third periodic transmission module is arranged to transmit the cell state information for executing an ON/OFF operation to the UE by itself through the DCI in a periodic manner according to the indication of the indication unit.

The third triggered transmission module is arranged to transmit the cell state information for executing an ON/OFF operation to the UE through the DCI in a triggered manner according to the indication of the indication unit.

The cell state information for executing an ON/OFF operation at least includes bit information of a corresponding on or OFF state of each of the small cells.

When turn-on time delays of the small cells are not fixed, the SCell state information for executing an ON/OFF operation further includes bit information indicating a turn-on allowable delay time corresponding to each of the small cells.

When the states of the small cells change within a DCI notification period, the SCell state information for executing an ON/OFF operation further includes bit information of a number of consecutive on sub frames corresponding to each of the small cells.

When turn-on time delays of the small cells are not fixed and the turn-on time delays are greater than one subframe, the cell state information for executing an ON/OFF operation further includes bit information indicating a turn-on allowable delay time corresponding to each of the small cells.

The system further includes a judgment unit and a processing unit.

Herein the judgment unit is arranged to, when the UE cannot receive a message of the cell state information for executing an ON/OFF operation, determine a carrier scenario in which and a reason why the cell state information for executing an ON/OFF operation cannot be received.

The processing unit is arranged to, when it is determined that the UE can receive the cell state information for executing an ON/OFF operation, transmit the cell state information for executing an ON/OFF operation to the UE which cannot receive the cell state information for executing an ON/OFF operation according to the determined carrier scenario and reason.

When the carrier scenario is a single carrier scenario, the following circumstances are included.

The judgment unit is arranged to determine that the reason why the cell state information for executing an ON/OFF operation cannot be received is that a new UE enters the small cell; and

The processing unit is arranged to, according to the determination that the reason why the cell state information for executing an ON/OFF operation cannot be received is that a new UE enters the small cell, at the time when the small cell determines that the UE can receive the cell state information for executing an ON/OFF operation, determine that the second periodic transmission module transmits the cell state information for executing an ON/OFF operation to the UE, and/or the second triggered transmission module transmits the cell state information for executing an ON/OFF operation to the UE, and/or the second periodic transmission module and the second triggered transmission module transmit the cell state information for executing an ON/OFF operation to the UE in a combined periodic and triggered manner and/or transmit the cell state information for executing an ON/OFF operation to the UE through high-layer signaling;

The judgment unit is arranged to determine that the reason why the cell state information for executing an ON/OFF operation cannot be received is that the UE is in a DRX_off state.

The processing unit is arranged to, according to the determination that the reason why the cell state information for executing an ON/OFF operation cannot be received is that the UE is in a DRX_off state, at the time when the small cell determines that the UE is switched to a receivable state, determine that the second periodic transmission module transmits the cell state information for executing an ON/OFF operation to the UE, and/or the second triggered transmission module transmits the cell state information for executing an ON/OFF operation to the UE, and/or the second periodic transmission module and the second triggered transmission module transmit the cell state information for executing an ON/OFF operation to the UE in a combined periodic and triggered manner.

The judgment unit is arranged to determine that the reason why the cell state information for executing an ON/OFF operation cannot be received is that the UE misses receiving the SCell state information for an ON/OFF operation transmitted by the small cell due to newly entering a connected state from an idle state.

The processing unit is arranged to, according to the determination that the reason why the cell state information for executing an ON/OFF operation cannot be received is that the UE misses receiving the cell state information for an ON/OFF operation transmitted by the small cell due to newly entering a connected state from an idle state, at the time when the small cell determines that the UE accesses, determine that the second periodic transmission module transmits the cell state information for executing an ON/OFF operation to the UE, and/or the second triggered transmission module transmits the cell state information for executing an ON/OFF operation to the UE, and/or the second periodic transmission module and the second triggered transmission module transmit the cell state information for executing an ON/OFF operation to the UE in a combined periodic and triggered manner.

When the carrier scenario is a CA scenario, the following circumstances are included.

The judgment unit is arranged to determine that the reason why the cell state information for executing an ON/OFF operation cannot be received is that the UE is in a DRX_off state.

The processing unit is arranged to, according to the determination that the reason why the cell state information for executing an ON/OFF operation cannot be received is that the UE is in a DRX_off state, at the time when the small cell determines that the UE is switched to a receivable state, determine that the second periodic transmission module transmits the cell state information for executing an ON/OFF operation to the UE, and/or the second triggered transmission module transmits the cell state information for executing an ON/OFF operation to the UE, and/or the second periodic transmission module and the second triggered transmission module transmit the cell state information for executing an ON/OFF operation to the UE in a combined periodic and triggered manner.

When the carrier scenario is a dual connection scenario, the following circumstances are included.

The judgment unit is arranged to determine that the reason why the cell state information for executing an ON/OFF operation cannot be received is that the UE is in a DRX_off state.

The processing unit is arranged to, according to the determination that the reason why the cell state information for executing an ON/OFF operation cannot be received is that the UE is in a DRX_off state, at the time when the small cell determines that the UE is switched to a receivable state, determine that the second periodic transmission module transmits the SCell state information for executing an ON/OFF operation to the UE, and/or the second triggered transmission module transmits the SCell state information for executing an ON/OFF operation to the UE, and/or the second periodic transmission module and the second triggered transmission module transmit the SCell state information for executing an ON/OFF operation to the UE in a combined periodic and triggered manner.

The determination unit is further arranged to, when it is determined that the first periodic transmission module and/or the first triggered transmission module transmits the PCell state information for executing an ON/OFF operation. The UE is UEs of all the SCells.

When it is determined that the Primary serving Cell (PCells) 1 transmits the PCell state information for executing an ON/OFF operation through the DCI in a periodic manner and/or in a triggered manner, the UE is UEs of SCells whose states change. And the cell state information for executing an ON/OFF operation further includes a Carrier Indicator Field (CIF).

When the carrier scenario is a CA scenario, the second triggered module is further arranged to, at the time when a new UE enters the small cell, transmit the cell state information for executing an ON/OFF operation to the UE.

When a small cell is added as a SCell, the first periodic transmission module and/or the first triggered transmission module is arranged to transmit the cell state information for executing an ON/OFF operation to the UE. Or the third periodic transmission module and/or the third triggered transmission module is arranged to transmit the cell state information for executing an ON/OFF operation to the UE. or the SCell is set to be in an OFF state, and the state information is determined thereof through a blind-detection signal or control information.

When the carrier scenario is a dual connection scenario, the system according to the embodiments of the present invention further includes a Main eNodeB (MeNB) and a Secondary eNodB (SeNB).

Herein the SeNB is arranged to add a small cell to a range to which it belongs.

The MeNB is arranged to, when the SeNB adds a small cell to a range to which it belongs, transmit the cell state information for executing an ON/OFF operation to the UE.

The second periodic transmission module and/or the second triggered transmission module is arranged to, when the SeNB adds a small cell to a range to which it belongs, transmit the cell state information for executing an ON/OFF operation to the UE so that the UE of the small cell performs detection and reception within the SeNB.

When the SeNB adds a small cell to the range, the UE sets the SeNB to be an OFF state, and determines the state information thereof through the blind detection signal or the control information.

The system according to the embodiments of the present invention further includes a transmission times unit that is arranged to preset a number of times, and repeatedly transmit the SCell state information for executing an ON/OFF operation to the UE.

The system according to the embodiments of the present invention further includes a time unit arranged to, when the small cell is in an ON state, and the small cell needs to transmit the cell state information for executing an ON/OFF operation to the UE, transmit the cell state information for executing an ON/OFF operation to the UE through the DCI according to a DTX time.

The present invention will be described in detail below through embodiments, but the embodiments are not used for limiting the protection scope of the present invention.

### Embodiment one

SCell state information for executing an ON/OFF operation is transmitted by a PCell to a UE through DCI in a periodic manner, which includes bit information of a corresponding on or OFF state of each small cell.

For example, by arranging and distinguishing the small cells, the bit information of the ON/OFF state of each small cell can be achieved by the following information: small cell 1 state indicator, small cell 2 state indicator, ... , small cell n state indicator. Generally, an ON/OFF state of an small cell n may be indicated by 1bit, for example, "0" represents that a small cell is turned off, and "1" represents that a small cell is turned on; and vice versa.

When turn-on time delays of small cells are not fixed and the turn-on time delays are greater than one subframe, SCell state information for an ON/OFF operation further includes bit information indicating a turn-on allowable delay time corresponding to each small cell.

The above arrangement is achieved by the following sentence: small cell 1 turn on time, small cell 2 turn on time, ... , small cell n turn on time. A field of "small cell n turn on time" is used to indicate a turn on time of a small cell n. The number of bits to be used is related to an allowable turn on delay time of a small cell. The turn on time of the small cell may be indicated by 1 bit, 2 bits, 3 bits or more bits. For example, if a time delay allowable for a small cell is 0ms, 1ms, 2ms and 4ms, 2 bits may be used to indicate as follows: "00" represents that a turn on command takes effect immediately (0ms), "01" represents that the turn on command takes effect in a next subframe (1ms), and so on, "10" represents that the turn on command takes effect after two subframes, and "11" represents that the turn on command takes effect after 4 subframes. As another example, if a maximum delay allowable for a small cell is 20ms, i.e., 2 subframes, 5 bits may be used for indication or several typical values are selected between 0 and 20 subframes, so that a number of bits for indication should be reduced as much as possible.

That is, the field of "small cell n turn on time" is not required in the following cases, i.e., there is no need to indicate the turn on time of the small cell (i.e., a delay from transmission of the DCI to the real activation).

If the use of dynamic small cell ON/OFF by a small cell needs to activate a small cell without a delay (or with a delay which is less than 1 subframe), there is no need to notify the turn on time of the small cell. If each delay of the small cell is a fixed time, for example, the DCI is transmitted 4 subframes in advance, the small cell is indicated to be activated from a next subframe. The fixed delay value of 4 subframes needs not to be notified to the UE.

When a state of a small cell changes within a DCI notification period, the SCell state information for an ON/OFF operation further includes bit information of a number of consecutive on subframes corresponding to each small cell. Here, it is achieved by the following sentences: small cell 1 consecutive on subframes, small cell 2 consecutive on subframes, ... , small cell n consecutive on subframes. A field of "small cell n consecutive on subframes" indicates the number of consecutive on subframes of the small cell n. A number of bits to be used is related to the DCI notification period. For example, if the DCI notification period is 10ms, the number of consecutive on subframes is at most 10 subframes, which may be represented by 4 bits. If the DCI notification period is a half subframe, it may be represented by 3 bits.

That is, there is no need to indicate the number of consecutive on subframes of the small cell in the following cases.

If a state of a small cell does not change within a DCI notification period, for example, the DCI notification period is 10ms, the small cell maintains the same state within 10ms. For example, if the "small cell n state indicator" indicates that the small cell is in an ON state in the next period, the small cell is in an ON state consecutively in 10 subframes of the next period. At this moment, there is no need to notify a number of consecutive on subframes of the small cell.

The SCell state information for an ON/OFF operation is transmitted through 1A/3/3A/1C in a DCI format; or
is transmitted using an idle bit of the 1A/3/3A/1C in the DCI format; or
is transmitted in a brand new DCI format.

Alternatively, the SCell state information for an ON/OFF operation in the DCI format is scrambled by the SI-RNTI, or the TPC-RNTI, or the P-RNTI, or a new common RNTI, and is then transmitted to each corresponding group of UEs.

When the SCell state information for executing an ON/OFF operation is transmitted by the PCell to the UE through the DCI in a periodic manner, a serial number of a small cell corresponding to the SCell state information for executing an ON/OFF operation is decided by an upper layer and is provided through SCEOnOff-Index. Thereby, the UE can understand a behavior of the corresponding cell.

### Embodiment two

Cell state information for executing an ON/OFF operation is transmitted by a PCell to a UE through DCI in a triggered manner, which includes bit information of a corresponding on or OFF state of each small cell.

That is, only when a state of one of several SCells belonging to the PCell or a small cell is triggered to change, the PCell transmits the DCI to notify an on or OFF state of the small cell.

Transmission in a triggered manner can be divided into two manners. When states of one or more SCells are triggered to change, the PCell transmits cell state information for executing an ON/OFF operation to the UE through the DCI. The second manner is that when the states of the one or more SCells are triggered to change, the PCell transmits the cell state information for executing an ON/OFF operation to the UE through the DCI at a periodic point after the SCells are triggered to be switched. For example, if transmission of the DCI indicating the SCell state information by the PCell may occur in subframe 6, subframe 16, subframe 26, ..., and a certain SCell which is turned off is triggered to turn on in subframe 24, the PCell waits until subframe 26 to transmit the DCI for indicating the state information thereof (the DCI indicating the state information is not transmitted in the previous subframe 6 and subframe 16).

In the above two manners, the first manner is better.

There are two manners to transmit the SCell state information for executing an ON/OFF operation. In a first manner, when the cell state information for executing an ON/OFF operation is transmitted to UEs of all the SCells, the Primary serving Cell (PCells) transmits through DCI in a periodic manner and/or in a triggered manner. Transmitting to UEs of all the SCells, the transmitted information includes bit information of a corresponding ON/OFF state of each small cell.

When a turn-on time delay of a small cell is not fixed and the turn-on time delay is greater than one subframe, the cell state information for an ON/OFF operation further includes bit information indicating a turn-on allowable delay time corresponding to each small cell.

When a state of a small cell changes within a DCI notification period, the cell state information for an ON/OFF operation further includes bit information of a number of consecutive on subframes corresponding to each small cell.

When the cell state information for executing an ON/OFF operation is transmitted to a UE of a SCell of which a state changes, the Primary serving Cell (PCells) transmits through the DCI in a periodic manner and/or in a triggered manner. In addition to the content in the cell state information for executing an ON/OFF operation transmitted to UEs of all the SCells, the SCell state information for executing an ON/OFF operation further includes a carrier indicator field (CIF for short).

A serial number of a small cell corresponding to the SCell state information for executing an ON/OFF operation is determined by the CIF.

### Embodiment three

When in a single carrier scenario, a small cell which executes an ON/OFF operation transmits the cell state information for executing an ON/OFF operation to the UE by itself through the DCI in a triggered manner. That is, only when a state of the small cell is triggered to change (including arrival/departure, UE-Cell association/de-association, a traffic condition change etc.), the small cell transmits the small cell which executes an ON/OFF operation to the UE through the DCI.

When states of one or more small cells are triggered to change, the small cell transmits the cell state information for executing an ON/OFF operation by itself through the DCI in a triggered manner.

When states of one or more small cells are triggered to change, the small cell transmits the SCell state information for executing an ON/OFF operation by itself through the DCI in a triggered manner at a periodic point after the SCell is triggered to be switched. Here, before transmitting the cell state information for executing an ON/OFF operation, the following step is further included: notifying a pattern in which the DCI occurs to the UE. For example, transmission of the DCI of the state information by the small cell may occur in subframe 6, subframe 16, subframe 26, ..., and if a certain small cell in an OFF state is triggered to be turned on in subframe 24, the small cell waits until subframe 26 to transmit DCI for indicating the state information thereof (the DCI indicating the state information is not transmitted in the previous subframe 6 and subframe 16). The second manner can reduce the power consumption of the UE and avoid the UE from blindly detecting the DCI all the time, even during the small cell off phase. Therefore, the second manner is preferred in the two manners. The premise of the second manner is that it needs to notify the UE of the pattern (for example, DRS burst, or DTX ON duration) in which the DCI occurs.

The transmission of the SCell state information for executing an ON/OFF operation is the same as that in the embodiment three.

### Embodiment four

A small cell which executes an ON/OFF operation transmits SCell state information for executing an ON/OFF operation to a UE by itself through DCI in a combined periodic and triggered manner.

Transmission in a combined periodic and triggered manner includes two manners:
1. When the small cell is in an ON state, the small cell transmits cell state information for executing an ON/OFF operation through the DCI in a periodic manner;. When the small cell is switched from an OFF state to an ON state, the small cell transmits the cell state information for executing an ON/OFF operation through the DCI in a triggered manner. When the small cell is in an OFF state, the small cell does not transmit the cell state information for executing an ON/OFF operation.
2. When the small cell is in an ON state, the small cell does not transmit the cell state information for executing an ON/OFF operation. When the small cell is switched from an ON state to an OFF state, the small cell transmits the cell state information for executing an ON/OFF operation through the DCI in a triggered manner. When the small cell is in an OFF state, the small cell transmits SCell state information for executing an ON/OFF operation through the DCI in a periodic manner.

### Embodiment five

When the UE cannot receive a message of cell state information for executing an ON/OFF operation,
when in a single carrier scene,
and when it is determined that the reason why the cell state information for executing an ON/OFF operation cannot be received is that a new UE enters the small cell, at the time when the small cell determines that the UE can receive the SCell state information for executing an ON/OFF operation,
the small cell transmits the cell state information for executing an ON/OFF operation to the UE by itself through the DCI in a periodic manner, and/or in a triggered manner, and/or in a combined periodic and triggered manner, or
transmits the cell state information for executing an ON/OFF operation to the UE through high-layer signaling.

When it is determined that the reason why the cell state information for executing an ON/OFF operation cannot be received is that the UE is in a DRX_off state, at the time when the small cell determines that the UE is switched to a receivable state, the small cell transmits the cell state information for executing an ON/OFF operation to the UE by itself through the DCI in a periodic manner, and/or in a triggered manner, and/or in a combined periodic and triggered manner.

When it is determined that the reason why the cell state information for executing an ON/OFF operation cannot be received is that the UE misses receiving the cell state information for an ON/OFF operation transmitted by the small cell due to newly entering a connected state from an idle state, at the time when the small cell determines that the UE accesses, the small cell transmitting the cell state information for executing an ON/OFF operation to the UE by itself through the DCI in a periodic manner, and/or in a triggered manner, and/or in a combined periodic and triggered manner.

When it is in a CA scenario,
and when it is determined that the reason why the cell state information for executing an ON/OFF operation cannot be received is that the UE is in a DRX_off state, at the time when the small cell determines that the UE is switched to a receivable state, the small cell transmits the cell state information for executing an ON/OFF operation to the UE by itself through the DCI in a periodic manner, and/or in a triggered manner, and/or in a combined periodic and triggered manner.
When it is in a dual connection scenario,
and when it is determined that the reason why the cell state information for executing an ON/OFF operation cannot be received is that the UE is in a DRX_off state, at the time when the small cell determines that the UE is switched to a receivable state, the small cell transmits the SCell state information for executing an ON/OFF operation to the UE by itself through the DCI in a periodic manner, and/or in a triggered manner, and/or in a combined periodic and triggered manner.

When it is in a CA scenario, the method according to the embodiments of the present invention further includes, when a new UE enters the small cell, the small cell transmits the cell state information for executing an ON/OFF operation to the UE in a triggered manner.

When a small cell is added as a SCell, the Primary serving Cells (PCells) transmits the cell state information for executing an ON/OFF operation to the UE through the DCI in a periodic manner and/or in a triggered manner. Or the SCell which executes an ON/OFF operation transmits the cell state information for executing an ON/OFF operation to the UE by itself in a periodic manner and/or in a triggered manner, or the SCell is set to be in an OFF state, and the state information is determined thereof through a blind-detection signal or control information.

When it is in a dual connection scenario, the method according to the embodiments of the present invention further includes the following step.

When a Secondary eNodB (SeNB) adds a small cell to a range to which it belongs, a Main NodeB (MeNB) transmits the cell state information for executing an ON/OFF operation to the UE. Or the small cell transmits the cell state information for executing an ON/OFF operation to the UE by itself in a periodic manner and/or in a triggered manner so that the UE of the small cell performs detection and reception within the SeNB. Or the UE sets the SeNB to be in an OFF state and determines the state information thereof through a blind detection signal or control information.

Although the implementations disclosed in the present application are described as above, the described content is merely implementations used to facilitate understanding of the present application, instead of limiting the present application, for example, specific implementation methods in the implementations of the present invention. Without departing from the spirit and scope disclosed in the present application, any skilled person in the art can make any modification and variation in the form and details of the implementations, but the patent protection scope of the present application should still be defined by the scope of the appended claims.

### Industrial Applicability

The above technical schemes transmit the cell state information for executing an ON/OFF operation to a UE by using corresponding members and transmission manners in the different scenarios, so that the transmission scheme of the cell state information for executing an ON/OFF operation is determined, and the small cell completes the ON/OFF operation according to the cell state information for an ON/OFF operation.

## Claims

1. A method for realizing notification of a state of a small cell, comprising:
according to a carrier scenario in which cell state information is transmitted, determining corresponding members and transmission manners for transmitting cell state information for executing an ON/OFF operation to a User Equipment, UE, wherein the cell state information is the cell state information for executing an ON/OFF operation; and
according to the determined members and transmission manners for transmitting the cell state information for executing an ON/OFF operation to the UE, transmitting the cell state information for executing an ON/OFF operation to complete a notification of state of the small cell;
wherein the members for transmitting the cell state information for executing an ON/OFF operation are Primary serving Cells, PCells, Secondary serving Cells, SCells, or small cells.

2. The method according to claim 1, wherein,
the carrier scenario is a Carrier Aggregation, CA, scenario, and determining corresponding members and transmission manners for transmitting cell state information for executing an ON/OFF operation to a UE comprises:
a PCell transmitting to the UE through Downlink Control Information, DCI, in a periodic manner and/or in a triggered manner; or
a SCell which executes an ON/OFF operation transmitting to the UE by itself in a periodic manner and/or in a triggered manner, wherein
the transmitted cell state information for executing an ON/OFF operation is SCell state information for executing an ON/OFF operation.

3. The method according to claim 1, wherein,
the carrier scenario is a single carrier scenario, and determining corresponding members and transmission manners for transmitting cell state information for executing an ON/OFF operation to a UE comprises:
a small cell which executes an ON/OFF operation transmitting to the UE by itself through DCI in a periodic manner and/or in a triggered manner and/or in a combined periodic and triggered manner.

4. The method according to claim 1, wherein,
the carrier scenario is a dual connection scenario, and determining corresponding members and transmission manners for transmitting cell state information which executes an ON/OFF operation to a UE comprises:
a SCell which executes an ON/OFF operation transmitting to the UE by itself through DCI in a periodic manner and in a triggered manner.

5. The method according to any one of claims 1-4, wherein,
the cell state information for executing an ON/OFF operation comprises bit information of a corresponding on or OFF state of each of the small cells.

6. The method according to any one of claims 2-4, wherein,
when turn-on time delays of the small cells are not fixed, the cell state information for executing an ON/OFF operation further comprises bit information indicating a turn-on allowable delay time corresponding to each of the small cells; and
when the states of the small cells change during a DCI notification period, the cell state information for executing an ON/OFF operation further comprises: bit information of the number of consecutive ON subframes corresponding to each of the small cells.

7. The method according to any one of claims 2-4, wherein,
when turn-on time delays of the small cells are not fixed and the turn-on time delays are greater than one subframe, the cell state information for executing an ON/OFF operation further comprises: bit information indicating a corresponding turn-on allowable delay time corresponding to each of the small cells.

8. The method according to any one of claims 2-4, further comprising:
transmitting the cell state information for executing an ON/OFF operation through 1A/3/3A/1C in a DCI format; or
transmitting the cell state information for executing an ON/OFF operation through an idle bit of the 1A/3/3A/1C in the DCI format; or
transmitting the cell state information for executing an ON/OFF operation in a brand new DCI format.

9. The method according to claim 8, further comprising:
before transmitting the SCell state information for executing an ON/OFF operation, scrambling the cell state information for an ON/OFF operation in a DCI format through a System Information-Radio Network Temporary Identifier, SI-RNTI, a Transmission Power Control-Radio Network Temporary Identifier, TPC-RNTI, or a Paging-Radio Network Temporary Identifier, P-RNTI, or a new common RNTI, and then transmitting the scrambled state information to each corresponding group of UEs.

10. The method according to claim 2, wherein,
when the PCell transmits the SCell state information for executing an ON/OFF operation to the UE through the DCI in a triggered manner, the method comprises:
when a state of the PCell is triggered to change, the PCell transmitting the cell state information for executing an ON/OFF operation to the UE through the DCI; or
when the state of the PCell is triggered to change, the PCell transmitting the cell state information for executing an ON/OFF operation to the UE through the DCI at a periodic point after the PCell is triggered to be switched; or
wherein the cell state information for executing an ON/OFF operation is cell state information of a PCell which executes an ON/OFF operation.

11. The method according to claim 10, wherein,
when the Primary serving Cell, PCell, transmits the PCell state information for executing an ON/OFF operation to the UE through the DCI in a periodic manner and/or in a triggered manner, the UE is UEs of all the PCells; and
when the PCell transmits the PCell state information for an ON/OFF operation to the UE through the DCI in a periodic manner and/or in a triggered manner, the UE is UEs of PCells of which states change, and the PCell state information for executing an ON/OFF operation further comprises a Carrier Indicator.

12. The method according to claim 2, wherein,
when the Primary serving cell, PCell, transmits the cell state information for executing an ON/OFF operation to the UE through the DCI in a triggered manner, the method includes:
when states of one or more SCells are triggered to change, the PCell transmitting the cell state information for executing an ON/OFF operation to the UE through the DCI; or
when the states of the one or more SCells are triggered to change, the PCell transmitting the cell state information for executing an ON/OFF operation to the UE through the DCI at a periodic point after the SCells are triggered to be switched.

13. The method according to claim 2, wherein,
when the Primary serving Cell, PCell, transmits the cell state information for executing an ON/OFF operation to the UE through the DCI in a periodic manner and/or in a triggered manner, the UE is UEs of all the SCells; and
when the PCell transmits the cell state information for executing an ON/OFF operation to the UE through the DCI in a periodic manner and/or in a triggered manner, the UE is UEs of SCells whose states change, and the SCell state information for executing an ON/OFF operation further comprises a Carrier Indicator Field, CIF.

14. The method according to claim 2, wherein,
when the PCell transmits the cell state information for executing an ON/OFF operation to the UEs of all the SCells through the DCI in a periodic manner, a serial number of a small cell corresponding to the SCell state information for executing an ON/OFF operation is decided by a high layer and is provided through SCEOnOff-Index; and
when the Primary serving Cell, PCell, transmits the cell state information for executing an ON/OFF operation through the DCI in a triggered manner to the UEs of the SCells, and the states of the UEs of the SCells change, a serial number of a small cell corresponding to the SCell state information for executing an ON/OFF operation is determined by a Carrier Indicator Field, CIF.

15. The method according to claim 3, wherein,
the small cell transmitting the SCell state information for executing an ON/OFF operation by itself through the DCI in a triggered manner to the UE comprises:
when states of one or more small cells are triggered to change, the small cell transmitting the cell state information for executing an ON/OFF operation to the UE by itself through the DCI in a triggered manner; or
when the states of the one or more small cells are triggered to change, the small cell transmitting the cell state information for executing an ON/OFF operation to the UE by itself through the DCI in a triggered manner at a periodic point after the SCells are triggered to be switched.

16. The method according to claim 15, further comprising:
before the small cell transmitting the cell state information for executing an ON/OFF operation to the UE by itself through the DCI in a triggered manner at a periodic point after the SCells are triggered to be switched, notifying a pattern in which the DCI occurs to the UE.

17. The method according to claim 3, wherein,
transmitting in a combined periodic and triggered manner comprises:
when the small cell is in an ON state, the small cell transmitting the cell state information for executing an ON/OFF operation through the DCI in a periodic manner; when the small cell is switched from an OFF state to an ON state, the small cell transmitting the cell state information for executing an ON/OFF operation through the DCI in a triggered manner; and when the small cell is in an OFF state, the small cell not transmitting the cell state information for executing an ON/OFF operation; or
when the small cell is in an ON state, the small cell not transmitting the cell state information for executing an ON/OFF operation; when the small cell is switched from an ON state to an OFF state, the small cell transmitting the cell state information for executing an ON/OFF operation through the DCI in a triggered manner; and when the small cell is in an OFF state, the small cell transmitting the SCell state information for executing an ON/OFF operation through the DCI in a periodic manner.

18. The method according to claim 1, further comprising:
when the UE cannot receive a message of the cell state information for executing an ON/OFF operation,
determining a carrier scenario in which and a reason why the cell state information for executing an ON/OFF operation cannot be received; and
when it is determined that the UE can receive the cell state information for executing an ON/OFF operation, transmitting the cell state information for executing an ON/OFF operation to the UE which cannot receive the cell state information for executing an ON/OFF operation according to the determined carrier scenario and reason.

19. The method according to claim 18, wherein,
when it is determined that the UE can receive the SCell state information for executing an ON/OFF operation, transmitting the cell state information for executing an ON/OFF operation to the UE which cannot receive the cell state information for executing an ON/OFF operation according to the determined carrier scenario and reason comprises:
when the carrier scenario is a single carrier scenario,
when it is determined that the reason why the cell state information for executing an ON/OFF operation cannot be received is that a new UE enters the small cell, at the time when the small cell determines that the UE can receive the cell state information for executing an ON/OFF operation,
the small cell transmitting the cell state information for executing an ON/OFF operation to the UE by itself through the DCI in a periodic manner, and/or in a triggered manner, and/or in a combined periodic and triggered manner, or transmitting the cell state information for executing an ON/OFF operation to the UE through high-layer signaling;
when it is determined that the reason why the cell state information for executing an ON/OFF operation cannot be received is that the UE is in a DRX_off state, at the time when the small cell determines that the UE is switched to a receivable state, the small cell transmitting the cell state information for executing an ON/OFF operation to the UE by itself through the DCI in a periodic manner, and/or in a triggered manner, and/or in a combined periodic and triggered manner,
when it is determined that the reason why the SCell state information for executing an ON/OFF operation cannot be received is that the UE misses receiving the SCell state information for executing an ON/OFF operation transmitted by the small cell due to newly entering a connected state from an idle state, at the time when the small cell determines that the UE accesses, the small cell transmitting the SCell state information for executing an ON/OFF operation to the UE by itself through the DCI in a periodic manner, and/or in a triggered manner, and/or in a combined periodic and triggered manner,
when the carrier scenario is a CA scenario,
when it is determined that the reason why the cell state information for executing an ON/OFF operation cannot be received is that the UE is in a DRX_off state, at the time when the small cell determines that the UE is switched to a receivable state, the small cell transmitting the cell state information for executing an ON/OFF operation to the UE by itself through the DCI in a periodic manner, and/or in a triggered manner, and/or in a combined periodic and triggered manner, and
when the carrier scenario is a dual connection scenario,
when it is determined that the reason why the SCell state information for executing an ON/OFF operation cannot be received is that the UE is in a DRX off state, at the time when the small cell determines that the UE is switched to a receivable state, the small cell transmitting the SCell state information for executing an ON/OFF operation to the UE by itself through the DCI in a periodic manner, and/or in a triggered manner, and/or in a combined periodic and triggered manner.

20. The method according to claim 1, 2, 5, 6, 7, 8, 9, 10, 11, 12, 13 or 15, further comprising:
when the carrier scenario is a CA scenario, if a new UE enters the small cell,
the small cell transmitting the cell state information for executing an ON/OFF operation to the UE in a triggered manner; and
when a small cell is added as a SCell, the Primary serving Cell, PCell, transmitting the cell state information for executing an ON/OFF operation to the UE through the DCI in a periodic manner and/or in a triggered manner; or the SCell which executes an ON/OFF operation transmitting the cell state information for executing an ON/OFF operation to the UE by itself in a periodic manner and/or in a triggered manner, or setting the SCell to be in an OFF state, and determining the state information thereof through a blind-detection signal or control information.

21. The method according to claim 1, 4, 5, 6, 7 or 8, further comprising:
when the carrier scenario is a dual connection scenario, and a Secondary eNodB, SeNB, adds a small cell to a range to which it belongs, a Main NodeB, MeNB, transmitting the SCell state information for executing an ON/OFF operation to the UE; or the small cell transmitting the cell state information for executing an ON/OFF operation to the UE by itself in a periodic manner and/or in a triggered manner so that the UE of the small cell performs detection and reception within the SeNB; or the UE setting the SeNB to be in an OFF state and determining the state information thereof through a blind detection signal or control information.

22. The method according to any one of claims 2-4, further comprising:
repeatedly transmitting the cell state information for executing an ON/OFF operation to the UE according to a preset number of times.

23. The method according to any one of claims 2-4, further comprising:
when the small cell is in an ON state, and the small cell needs to transmit the cell state information for executing an ON/OFF operation to the UE, transmitting the cell state information for executing an ON/OFF operation to the UE through the DCI according to a DTX time.

24. A system for realizing notification of a state of a small cell, comprising: a determination unit, a first transmission unit for a Primary serving Cell, PCell, a second transmission unit for a small cell, and a third transmission unit for a Secondary serving Cell, SCell, wherein,
the determination unit is arranged to determine that the first transmission unit, or the second transmission unit or the third transmission unit transmits SCell state information for executing an ON/OFF operation in a corresponding transmission manner according to a carrier scenario in which the SCell state information for executing an ON/OFF operation is transmitted;
an indication unit is arranged to indicate the first transmission unit, or the second transmission unit, or the third transmission unit to transmit the SCell state information for executing an ON/OFF operation in a corresponding transmission manner; and
the first transmission unit, or the second transmission unit, or the third transmission unit is arranged to transmit the cell state information for executing an ON/OFF operation to a User Equipment, UE, according to an indication of the determination unit, to complete the notification of the state of the small cell.

25. The system according to claim 24, wherein, when the carrier scenario is a Carrier Aggregation, CA, scenario,
the determination unit is arranged to determine that the first transmission unit transmits the cell state information for executing an ON/OFF operation through Downlink Control Information, DCI, in a periodic manner and/or in a triggered manner; or a cell which executes an ON/OFF operation transmits the cell state information for executing an ON/OFF operation by itself through the DCI in a periodic manner and/or in a triggered manner;
the indication unit is arranged to transmit an indication to the first transmission unit according to the determination from the determination unit that the first transmission unit transmits the cell state information for executing an ON/OFF operation through the DCI in a periodic manner and/or in a triggered manner or that the cell which executes an ON/OFF operation transmits the cell state information for executing an ON/OFF operation by itself through the DCI in a periodic manner and/or in a triggered manner; and
the first transmission unit comprises a first periodic transmission module and a first triggered transmission module; wherein
the first periodic transmission module is arranged to transmit the cell state information for executing an ON/OFF operation to the UE through the DCI in a periodic manner according to the indication of the indication unit; and
the first triggered transmission module is arranged to transmit the cell state information for executing an ON/OFF operation to the UE through the DCI in a triggered manner according to the indication of the indication unit;
wherein, the transmitted cell state information for executing an ON/OFF operation is SCell state information for executing an ON/OFF operation.

26. The system according to claim 24, wherein, when the carrier scenario is a single carrier scenario,
the determination unit is arranged to determine that the second transmission unit transmits the cell state information for executing an ON/OFF operation by itself through DCI in a periodic manner and/or in a triggered manner and/or in a combined periodic and triggered manner;
the indication unit is arranged to transmit an indication to the second transmission unit according to the determination from the determination unit that the second transmission unit transmits the cell state information for executing an ON/OFF operation by itself through the DCI in a periodic manner and/or in a triggered manner and/or in a combined periodic and triggered manner; and
the second transmission unit comprises a second periodic transmission module and a second triggered transmission module; wherein
the second periodic transmission module is arranged to transmit the cell state information for executing an ON/OFF operation to the UE by itself through the DCI in a periodic manner according to the indication of the indication unit; and
the second triggered transmission module is arranged to transmit the cell state information for executing an ON/OFF operation to the UE through the DCI in a triggered manner according to the indication of the indication unit; wherein,
the second periodic transmission module and the second triggered transmission module are further arranged to transmit the cell state information for executing an ON/OFF operation to the UE through the DCI in a combined periodic and triggered manner according to the indication of the indication unit.

27. The system according to claim 24, wherein, when the carrier scenario is a dual connection scenario,
the determination unit is arranged to determine that the third transmission unit transmits the cell state information for executing an ON/OFF operation by itself through DCI in a periodic manner and/or in a triggered manner;
the indication unit is arranged to transmit an indication to the third transmission unit according to the determination from the determination unit that the third transmission unit transmits the cell state information for executing an ON/OFF operation by itself through the DCI in a periodic manner and/or in a triggered manner; and
the third transmission unit comprises a third periodic transmission module and a third triggered transmission module; wherein
the third periodic transmission module is arranged to transmit the cell state information for executing an ON/OFF operation to the UE by itself through the DCI in a periodic manner according to the indication of the indication unit; and
the third triggered transmission module is arranged to transmit the cell state information for executing an ON/OFF operation to the UE through the DCI in a triggered manner according to the indication of the indication unit.

28. The system according to any one of claims 24-27, wherein, the cell state information for executing an ON/OFF operation comprises:
bit information of a corresponding ON or OFF state of each of the small cells.

29. The system according to any one of claims 24-27, wherein,
when turn-on time delays of the small cells are not fixed, the cell state information for executing an ON/OFF operation further comprises bit information indicating a turn-on allowable delay time corresponding to each of the small cells; and
when the states of the small cells change during a DCI notification period, the cell state information for executing an ON/OFF operation further comprises: bit information of the number of consecutive ON subframes corresponding to each of the small cells.

30. The system according to any one of claims 24-27, wherein,
when turn-on time delays of the small cells are not fixed and the turn-on time delays are greater than one subframe, the cell state information for executing an ON/OFF operation further comprises: bit information indicating a turn-on allowable delay time corresponding to each of the small cells.

31. The system according to anyone of claims 24-27, further comprising:
an adding unit, arranged to add the cell state information for executing an ON/OFF operation in 1A/3/3A/1C in a DCI format for transmission; or add the cell state information for executing an ON/OFF operation in an idle bit of the 1A/3/3A/1C in the DCI format for transmission; or add the cell state information for executing an ON/OFF operation in a brand new DCI format for transmission.

32. The system according to claim 31, further comprising:
a scrambling unit, arranged to, before transmitting the cell state information for executing an ON/OFF operation, scramble the cell state information for an ON/OFF operation in a DCI format through a System Information-Radio Network Temporary Identifier, SI-RNTI, a Transmission Power Control-Radio Network Temporary Identifier, TPC-RNTI, or a Paging-Radio Network Temporary Identifier, P-RNTI, or a new common RNTI, and then transmit the scrambled state information to each corresponding group of UEs.

33. The system according to claim 25, wherein,
when the PCell transmits the SCell state information for executing an ON/OFF operation to the UE through the DCI in a triggered manner, comprising:
when a state of the PCell is triggered to change, the PCell transmitting the cell state information for executing an ON/OFF operation to the UE through the DCI; or
when the state of the PCell is triggered to change, the PCell transmitting the cell state information for executing an ON/OFF operation to the UE through the DCI at a periodic point after the PCell is triggered to be switched,
wherein the cell state information for executing an ON/OFF operation is cell PCell state information for executing an ON/OFF operation.

34. The system according to claim 25, wherein,
the determination unit is arranged to, when states of one or more SCells are triggered to change, determine that the first triggered transmission module transmits the cell state information for executing an ON/OFF operation through the DCI; or determine that the first triggered transmission module transmits the cell state information for executing an ON/OFF operation through the DCI at a periodic point after the SCells are triggered to be switched.

35. The system according to claim 25, wherein,
the determination unit is further arranged to, when it is determined that the first periodic transmission module and/or the first triggered transmission module transmits the cell state information for executing an ON/OFF operation, determine that the UE is UEs of all the SCells; and when it is determined that the PCell transmits the cell state information for executing an ON/OFF operation through the DCI in a periodic manner and/or in a triggered manner, determine that the UE is UEs of SCells of which states change, and the cell state information for executing an ON/OFF operation further comprises a Carrier Indicator Field, CIF.

36. The system according to claim 25, wherein,
when the first periodic transmission module transmits the cell state information for executing an ON/OFF operation to the UEs of all the SCells, a serial number of a small cell corresponding to the SCell state information for executing an ON/OFF operation is decided by a high layer and is provided through SCEOnOff-Index; and
when the first triggered transmission module transmits the SCell state information for executing an ON/OFF operation to the UEs of the SCells of which states change, a serial number of a small cell corresponding to the SCell state information for executing an ON/OFF operation is decided by a Carrier Indicator Field, CIF.

37. The system according to claim 26, wherein,
the determination unit is arranged to, when states of one or more small cells are triggered to change, determine that the second triggered transmission module transmits the cell state information for executing an ON/OFF operation through the DCI; or determine that the second triggered transmission module transmits the cell state information for executing an ON/OFF operation through the DCI at a periodic point after the SCells are triggered to be switched; and
the second triggered transmission module is arranged to transmit the cell state information for executing an ON/OFF operation to the UE through the DCI or transmit the cell state information for executing an ON/OFF operation through the DCI at a periodic point after the SCells are triggered to be switched.

38. The system according to claim 37, further comprising:
a notification pattern unit, arranged to, before the second triggered transmission module transmits the cell state information for executing an ON/OFF operation to the UE through the DCI at a periodic point after the SCells are triggered to be switched, notify a pattern in which the DCI occurs to the UE.

39. The system according to claim 26, wherein,
transmitting in a combined periodic and triggered manner comprises:
when the small cell is in an ON state, the small cell transmitting the cell state information for executing an ON/OFF operation through the DCI in a periodic manner; when the small cell is switched from an OFF state to an ON state, the small cell transmitting the cell state information for executing an ON/OFF operation through the DCI in a triggered manner; and when the small cell is in an OFF state, the small cell not transmitting the cell state information for executing an ON/OFF operation; or
when the small cell is in an ON state, the small cell not transmitting the cell state information for executing an ON/OFF operation; when the small cell is switched from an ON state to an OFF state, the small cell transmitting the cell state information for executing an ON/OFF operation through the DCI in a triggered manner; and when the small cell is in an OFF state, the small cell transmitting the SCell state information for executing an ON/OFF operation through the DCI in a periodic manner.

40. The system according to claim 24, further comprising: a judgment unit and a processing unit, wherein,
the judgment unit is arranged to, when the UE cannot receive a message of the cell state information for executing an ON/OFF operation, determine a carrier scenario in which and a reason why the cell state information for executing an ON/OFF operation cannot be received; and
the processing unit is arranged to, when it is determined that the UE can receive the cell state information for executing an ON/OFF operation, transmit the cell state information for executing an ON/OFF operation to the UE which cannot receive the cell state information for executing an ON/OFF operation according to the determined carrier scenario and reason.

41. The system according to claim 40, wherein,
when the carrier scenario is a single carrier scenario,
the judgment unit is arranged to determine that the reason why the cell state information for executing an ON/OFF operation cannot be received is that a new UE enters the small cell; and
the processing unit is arranged to, according to the determination that the reason why the cell state information for executing an ON/OFF operation cannot be received is that a new UE enters the small cell, at the time when the small cell determines that the UE can receive the cell state information for executing an ON/OFF operation, determine that the second periodic transmission module transmits the cell state information for executing an ON/OFF operation to the UE, and/or the second triggered transmission module transmits the cell state information for executing an ON/OFF operation to the UE, and/or the second periodic transmission module and the second triggered transmission module transmit the cell state information for executing an ON/OFF operation to the UE in a combined periodic and triggered manner and/or transmit the cell state information for executing an ON/OFF operation to the UE through high-layer signaling;
the judgment unit is arranged to determine that the reason why the cell state information for executing an ON/OFF operation cannot be received is that the UE is in a DRX off state; and
the processing unit is arranged to, according to the determination that the reason why the cell state information for executing an ON/OFF operation cannot be received is that the UE is in a DRX off state, at the time when the small cell determines that the UE is switched to a receivable state, determine that the second periodic transmission module transmits the cell state information for executing an ON/OFF operation to the UE, and/or the second triggered transmission module transmits the cell state information for executing an ON/OFF operation to the UE, and/or the second periodic transmission module and the second triggered transmission module transmit the cell state information for executing an ON/OFF operation to the UE in a combined periodic and triggered manner; and
the judgment unit is arranged to determine that the reason why the cell state information for executing an ON/OFF operation cannot be received is that the UE misses receiving the SCell state information for an ON/OFF operation transmitted by the small cell due to newly entering a connected state from an idle state; and
the processing unit is arranged to, according to the determination that the reason why the cell state information for executing an ON/OFF operation cannot be received is that the UE misses receiving the cell state information for an ON/OFF operation transmitted by the small cell due to newly entering a connected state from an idle state, at the time when the small cell determines that the UE accesses, determine that the second periodic transmission module transmits the cell state information for executing an ON/OFF operation to the UE, and/or the second triggered transmission module transmits the cell state information for executing an ON/OFF operation to the UE, and/or the second periodic transmission module and the second triggered transmission module transmit the cell state information for executing an ON/OFF operation to the UE in a combined periodic and triggered manner; and
when the carrier scenario is a CA scenario,
the judgment unit is arranged to determine that the reason why the cell state information for executing an ON/OFF operation cannot be received is that the UE is in a DRX off state; and
the processing unit is arranged to, according to the determination that the reason why the cell state information for executing an ON/OFF operation cannot be received is that the UE is in a DRX off state, at the time when the small cell determines that the UE is switched to a receivable state, determine that the second periodic transmission module transmits the cell state information for executing an ON/OFF operation to the UE, and/or the second triggered transmission module transmits the cell state information for executing an ON/OFF operation to the UE, and/or the second periodic transmission module and the second triggered transmission module transmit the cell state information for executing an ON/OFF operation to the UE in a combined periodic and triggered manner, and
when the carrier scenario is a dual connection scenario,
the judgment unit is arranged to determine that the reason why the cell state information for executing an ON/OFF operation cannot be received is that the UE is in a DRX off state; and
the processing unit is arranged to, according to the determination that the reason why the cell state information for executing an ON/OFF operation cannot be received is that the UE is in a DRX off state, at the time when the small cell determines that the UE is switched to a receivable state, determine that the second periodic transmission module transmits the SCell state information for executing an ON/OFF operation to the UE, and/or the second triggered transmission module transmits the SCell state information for executing an ON/OFF operation to the UE, and/or the second periodic transmission module and the second triggered transmission module transmit the SCell state information for executing an ON/OFF operation to the UE in a combined periodic and triggered manner.

42. The system according to claim 33, wherein,
the determination unit is further arranged to, when it is determined that the first periodic transmission module and/or the first triggered transmission module transmits the PCell state information for executing an ON/OFF operation, the UE is UEs of all the SCells; and
when it is determined that the Primary serving Cell, PCell, transmits the PCell state information for executing an ON/OFF operation through the DCI in a periodic manner and/or in a triggered manner, the UE is UEs of SCells whose states change, and the cell state information for executing an ON/OFF operation further comprises a Carrier Indicator Field, CIF.

43. The system according to claim 24, 25, 28, 29, 30, 21, 32, 33, 34, 35 or 40, wherein,
the second triggered module is further arranged to, when the carrier scenario is a CA scenario, at the time when a new UE enters the small cell, transmit the cell state information for executing an ON/OFF operation to the UE; and
when a small cell is added as a SCell, the first periodic transmission module and/or the first triggered transmission module transmits the cell state information for executing an ON/OFF operation to the UE; or the third periodic transmission module and/or the third triggered transmission module transmits the cell state information for executing an ON/OFF operation to the UE; or set the SCell to be in an OFF state, and determine the state information thereof through a blind-detection signal or control information.

44. The system according to claim 24, 27, 28, 29, 30 or 31, wherein,
when the carrier scenario is a dual connection scenario, the system further comprises a Main eNodeB, MeNB, and a Secondary eNodB, SeNB, wherein
the SeNB is arranged to add a small cell to a range to which it belongs; and
the MeNB is arranged to, when the SeNB adds a small cell to a range to which it belongs, transmit the cell state information for executing an ON/OFF operation to the UE; and
the second periodic transmission module and/or the second triggered transmission module is arranged to, when the SeNB adds a small cell to a range to which it belongs, transmit the cell state information for executing an ON/OFF operation to the UE so that the UE of the small cell performs detection and reception within the SeNB.

45. The system according to any one of claims 24-27, further comprising:
a transmission times unit, arranged to preset the number of times, and repeatedly transmit the SCell state information for executing an ON/OFF operation to the UE.

46. The system according to any one of claims 24-27, further comprising:
a time unit arranged to, when the small cell is in an ON state, and the small cell needs to transmit the cell state information for executing an ON/OFF operation to the UE, transmit the cell state information for executing an ON/OFF operation to the UE through the DCI according to a DTX time.

47. A computer program comprising program instructions, when executed by a computer, cause the computer to perform the method according to any one of claims 1-23.

48. A carrier having the computer program according to claim 47 carried therein.
